(19) **Europäisches Patentamt**
**European Patent Office**
**Office européen des brevets**

(11) **EP 4 686 516 A1**

(12) **EUROPEAN PATENT APPLICATION**

(43) Date of publication:
04.02.2026 Bulletin 2026/06

(21) Application number: 24191544.6

(22) Date of filing: 29.07.2024

(51) International Patent Classification (IPC):
*B22F 1/18* $^{(2022.01)}$   *B01J 23/38* $^{(2006.01)}$
*B01J 23/42* $^{(2006.01)}$   *H01M 4/90* $^{(2006.01)}$
*H01M 4/92* $^{(2006.01)}$

(52) Cooperative Patent Classification (CPC):
**H01M 4/926; B01J 21/18; B01J 23/38; B01J 23/42;**
**B01J 23/70; B01J 23/8913; B01J 35/23;**
**B01J 35/30; B01J 35/393; B01J 35/40;**
**B01J 35/45; B01J 35/647; B01J 37/0018;**
**B22F 1/18; H01M 4/9083;** (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **ReCatalyst, razvoj, proizvodnja in**
**prodaja**
**Katalizatorskih kompozitov, d.o.o.**
**1000 Ljubljana (SI)**

(72) Inventors:
• **PAVKO, Luka**
**1000 Ljubljana (SI)**
• **GONZÁLEZ LÓPEZ, Francisco Javier**
**28923 Madrid (ES)**

(74) Representative: **Haseltine Lake Kempner LLP**
**One Portwall Square**
**Portwall Lane**
**Bristol BS1 6BH (GB)**

(54) **COMPOSITE MATERIAL FOR USE AS A CATALYST**

(57)    Herein is described a composite material, the composite material comprising composite particles comprising particles of a mesoporous carbon support material having dispersed on their surfaces noble metal nanoparticles and/or noble metal-M alloy nanoparticles and optionally particles of the elemental metal M or metal oxide $MO_y$, wherein y is >0 to a stoichiometric value of the metal oxide, wherein M is a less noble metal than the noble metal, wherein the composite particles have a BJH average pore diameter of from 2 to 50 nm and a particle size D90, as measured by laser diffraction and volume distribution, of 10 $\mu$m or less.

**EP 4 686 516 A1**

(52) Cooperative Patent Classification (CPC): (Cont.)
**H01M 4/921;** B01J 35/615; B01J 35/617;
B01J 35/618; B01J 35/633

**Description**

The present application relates to composite materials, methods of making those materials and using those materials.

**Background**

Fuel cells, particularly proton exchange membrane fuel cells (PEMFC), are able to convert hydrogen and oxygen using a catalyst, producing electricity, with water as the only by-product. Catalysts have been investigated for many years. Some catalysts in fuel cells have platinum on a carbon support. Many factors affect the efficacy of the catalyst, both in the platinum and any additional materials deposited on the catalyst and the type of carbon used. There are many different types of carbon, each having its own advantages and disadvantages in the context of fuel cells. The different types of carbon that have been investigated include carbon black, one-dimensional nanomaterials, such as carbon nanotubes, graphene, ordered mesoporous materials, and variants of these.

Carbon blacks vary widely in their surface area, e.g. from 200 $m^2$/g to 1500 $m^2$/g. A carbon black with a high surface area is Ketjen Black EC300J - this has a high surface area with the primary particles having microporosity. If using platinum as the catalytic metal on Ketjen Black EC300J, a fraction of all nanoparticles of the platinum is dispersed in the micropores, preventing poisoning of the platinum or other precious metal by the ionomers typically used in the fuel cell (such as perfluoro sulfonic acid ionomers) - this also enhances the kinetic properties. A disadvantage with such carbon blacks is that they suffer from large proton transport losses and local-$O_2$ transport losses - this leads to poor catalyst accessibility or in other words lower utilization of platinum especially in the case of dryer conditions (absence of sufficient amounts of liquid water).

Another type of carbon has solid particles and a medium surface area, such as Vulcan XC72-type carbon. In such carbon, the deposited platinum nanoparticles reside mostly on the outer surface of the primary carbon particles, since it has few or no pores within them. Such carbons have better reactant accessibility than with lower proton transport and local-$O_2$ transport resistances, given their low micro- and mesoporosity. However, they suffer from the disadvantage of poor kinetic performance due to a high degree of ionomer poisoning and poor durability, since the particles are more prone to agglomeration.

Another type of carbon that has been investigated is mesoporous carbon - this is carbon with connected mesopores in its primary particles. They can be made in a variety of ways, including templating, e.g. endo-templating where carbon is formed around templates (of mesopore size) and the templates then removed to leave the mesopores, interconnected by micropores. Similarly to microporous carbons, it is possible to deposit a large fraction of the platinum nanoparticles within the mesopores of such carbons where they are similarly protected against ionomer poisoning, exhibiting also enhanced kinetic properties. In addition, due to the intrinsically larger size of the mesopores, such catalysts also exhibit an improved local $O_2$-transport resistance. However, it has been found that catalysts made using such mesoporous carbons do not operate well at lower humidities, i.e. dry(er) conditions, which results in the lack of the sufficient amounts of protons or rather increased proton transport resistance.

As can be seen, it is a challenge to provide a carbon support that maintains or improves on the desirable properties, while minimizing the disadvantages.

**Summary of the Invention**

In a first aspect, the present disclosure provides a composite material, the composite material comprising composite particles comprising particles of a mesoporous carbon support material having dispersed on their surfaces noble metal nanoparticles and/or noble metal-M alloy nanoparticles and optionally particles of the elemental metal M or metal oxide $MO_y$, wherein y is >0 to a stoichiometric value of the metal oxide, wherein M is a less noble metal than the noble metal,
wherein the composite particles have a BJH average pore diameter of from 2 to 50 nm and a particle size D90, as measured by laser diffraction and volume distribution, of 10 $\mu$m or less.

In a second aspect, there is provided a method of making a composite material, the method comprising:

providing particles of a mesoporous carbon support material,

forming composite particles by dispersing noble metal nanoparticles and/or noble metal-M alloy nanoparticles on the surfaces of the mesoporous carbon support material, wherein M is a less noble metal than the noble metal, such that the composite particles have a BJH average pore diameter of from 2 to 50 nm and a particle size D90, as measured by laser diffraction, of 10 $\mu$m or less. In the method, preferably either:

(i) the mesoporous carbon support material has a particle size D90 of from 10 $\mu$m or less before the noble metal nanoparticles and/or noble metal-M alloy nanoparticles are dispersed on the surfaces of the mesoporous carbon support **or**

(ii) the mesoporous carbon support material has a particle size D90 of greater than 10 $\mu$m before the noble metal nanoparticles and/or noble metal-M alloy nanoparticles are dispersed on the surfaces of the mesoporous carbon support,

and, after the noble metal nanoparticles and/or noble metal-M alloy nanoparticles are dispersed on the surfaces of the mesoporous carbon support, the particles are subjected to a size reduction, such that the composite particles have the particle size D90, as measured by laser diffraction, of from 10 $\mu$m or less. The 'surfaces' of the mesoporous carbon support includes exterior particle surfaces and surfaces in the interior of the particles in the pores.

Optionally, the method optionally further comprises, before the noble metal nanoparticles and/or noble metal-M alloy nanoparticles are dispersed on the surface of the mesoporous carbon support, depositing particles of the elemental less noble metal M or less noble metal oxide $MO_y$ on the surfaces of the mesoporous carbon support, wherein y is >0 to a stoichiometric value of the metal oxide. The method may further involve annealing to alloy the noble metal and the less noble metal and optionally remove any metal oxide $MO_y$. If a size reduction is carried out, this may be carried out at any stage, e.g. before the elemental less noble metal M or less noble metal oxide $MO_y$ are deposited on the surfaces of the mesoporous carbon support or after the elemental less noble metal M or less noble metal oxide $MO_y$ are deposited on the surfaces of the mesoporous carbon support and before the noble metal nanoparticles and/or noble metal-M alloy nanoparticles are dispersed on the surface of the mesoporous carbon support or after the elemental less noble metal M or less noble metal oxide $MO_y$ are deposited on the surfaces of the mesoporous carbon support and after the noble metal nanoparticles and/or noble metal-M alloy nanoparticles are dispersed on the surface of the mesoporous carbon support, and, if annealing is carried out to alloy the noble metal and the less noble metal, before or after the annealing is carried out.

In a third aspect, there is provided a catalyst comprising the composite material according to the first aspect or producible by the second aspect.

In a fourth aspect, there is provided a method of catalysing a chemical reaction, the method comprising contacting one or more reactants with a catalyst according to the third aspect.

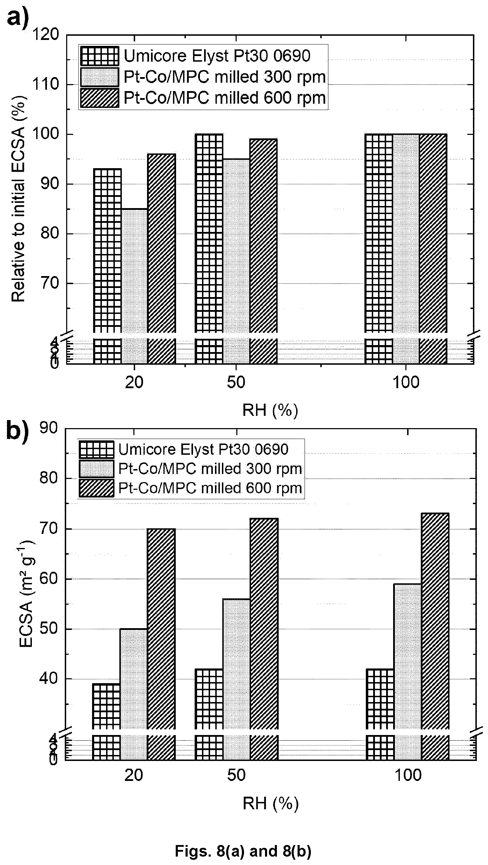

The present inventors have found that a balance of properties in fuel cell catalysts can be achieved using mesoporous carbon supports, in which the particle sizes are carefully controlled, such that D90, as measured by laser diffraction, is 10 $\mu$m or less. They were found to have the advantage of microporous carbon blacks, believed to derive from a considerable macroporous network, while avoiding or lessening the disadvantages typically seen with mesoporous carbon support, e.g. poor performance at low humidity levels. The present inventors consider that some of the disadvantages of former mesoporous carbon supports, particularly those made by the templating method, arose from larger primary particles, which are a product of the templating synthesis method. The following is illustrated and explained in more detail in the Examples. As a simple illustration of the effectiveness of the composite materials as disclosed herein at low humidity conditions, see Figures 8(a) and (b).

**Brief Description of the Figures**

The Figures relate to tests carried out on embodiments of the composite material and precursors and comparative materials described in the Examples.

Figure 1 shows BJH adsorption comparison data of: (a) cumulative pore volume for carbons, (c) cumulative pore volume for Co/C composites, (b) differential pore volume distribution for carbons, (d) differential pore volume distribution for Co/C composites. (e) SEM image of mesoporous carbon from Toyo Tanso MH-18 milled at 300 rpm with 1 mm ZrO balls and (f) 600 rpm with also 1 mm ZrO balls using a planetary mill PM-100. 2However, what is also known to a skilled person in the art, these two carbons consist of so-called 'primary particles'.

Figure 3 (a) and (c) show SEM imaging of PtCo/MPC catalyst where the carbon particles were milled at 300 rpm with 1 mm ZrO balls at different scales of resolution. (b) and (d) SEM imaging of PtCo/MPC catalyst where the carbon particles were milled at 600 rpm with 1 mm ZrO balls at different scales of resolution.

Figure 4 shows, respectively, the volumetric and numeric distribution of particle sizes using laser diffractions method for: MPC carbon (Figures 3(a) and (d)); PtCo/MCP catalyst where the carbon particles were milled at 300 rpm with 1 mm ZrO balls (Figures 3(b) and (e); and PtCo/MCP catalyst where the carbon particles were milled at 600 rpm with 1 mm ZrO balls (Figures 3(c) and (f)).

Figure 5 shows BJH adsorption comparison data of: (a) cumulative pore volume for final PtCo catalysts, (b) differential pore volume distribution for final PtCo catalysts including Umicore benchmark Eyst Pt30 0690.

Figure 6 shows EDX-SEM data on the final de-alloyed PtCo/MPC catalysts milled at (a) 300 rpm, 1 mm ZrO balls and (b) 600 rpm, 1 mm ZrO balls.

Figure 7 shows TF-RDE measurement overlap comparing both the PtCo/MPC catalysts milled at 300 and 600 rpm with 1 ZrO balls.

Figures 8(a) and 7(b) show, respectively, oxygen reduction reaction (ORR) polarization curves measured in a 4 cm$^2$ single-cell (7a) and high frequency resistances (HFR) (7b) of PtCo/MPC where the carbon particles were milled at 300 rpm with 1 mm ZrO balls PtCo/MPC where the carbon particles were milled at 600 rpm with 1 mm ZrO balls. Measurement conditions: 95 °C, H$_2$/air, 35/80 %RH (anode/cathode).

Figures 9 (b) and (a) show, respectively, a change of electrochemical surface area (ECSA) with change in relative humidity and ECSA relative to the initial ECSA.

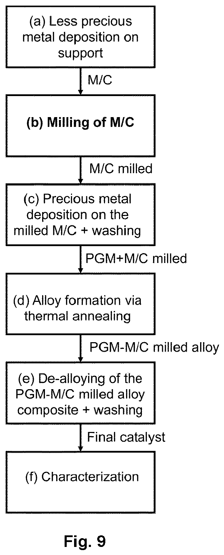

Figure 9 shows a schematic embodiment of a method for producing the composite material as described herein.

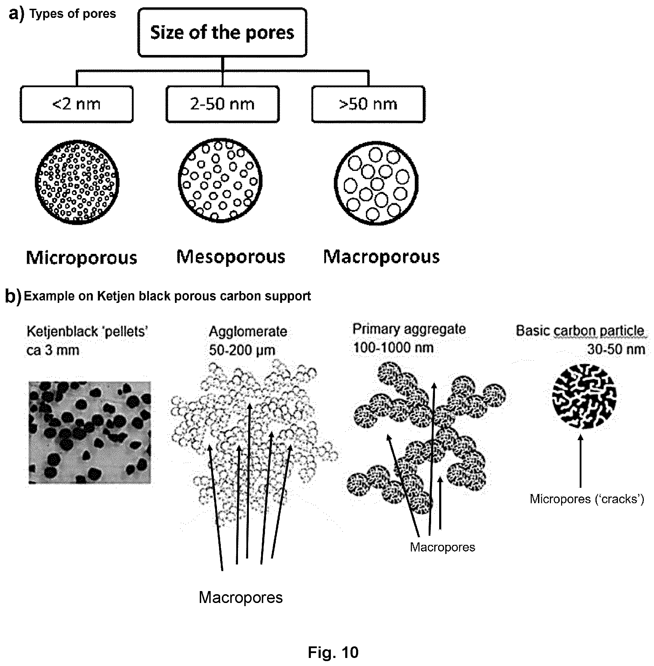

Figures 10(a) and 10(b) show respectively, (i) sizes for micro-, meso- and macropores and (ii) an illustration of the particle sizes in microporous Ketjen Black EC300J.

## Detailed description

Optional and preferred features of the present disclosure are described below. Each optional and preferred feature is applicable to any aspect, and combinable with any other optional and preferred feature.

## Composite material

In a first aspect, the present disclosure provides a composite material, the composite material comprising composite particles comprising particles of a mesoporous carbon support material having dispersed on their surfaces noble metal nanoparticles and/or noble metal-M alloy nanoparticles and optionally particles of the elemental metal M or metal oxide MO$_y$, wherein y is >0 to a stoichiometric value of the metal oxide, wherein M is a less noble metal than the noble metal, wherein the composite particles have a BJH average pore diameter of from 2 to 50 nm and a particle size D90, as measured by laser diffraction and volume distribution, of 10 $\mu$m or less.

## Mesoporous carbon support material

A mesoporous carbon support material herein refers to a carbon support material that is particulate and where the carbon itself, e.g. in the primary particles of carbon, contains mesopores, i.e. pores within the range of 2 to 50 nm. A mesoporous carbon support material does not include carbon support materials that are non-porous or microporous in the carbon (and lacking mesopores in the carbon), but having simply having mesopores between the particles, such as typical carbon or furnace blacks. In an embodiment, the mesoporous carbon support material is not a carbon black. A mesoporous carbon support is preferably a particulate carbon material wherein the carbon of the carbon particles contains interconnected mesopores. Unless otherwise indicated, in this section, the properties of the mesoporous carbon support are before deposition of any noble or any less noble metal on the support.
The mesoporous carbon may be heteroatom doped or functionalized (e.g. with the hetero atom being selected from N, B, S, O, P, F).
Mesoporous carbon support materials can be made in various way. The mesoporous carbon support may be made by a technique selected from an activation method, catalytic activation using metal ions, a template method, and a carbonised method.
The mesoporous carbon support material may be an ordered mesoporous carbon material or a disordered mesoporous carbon support material, but preferably an ordered mesoporous carbon material. An ordered mesoporous carbon material has uniform mesopores, which can be periodically arranged to show distinct X-ray diffraction lines. Ordered mesoporous carbon material can be produced by the template method.
Disordered mesoporous carbon, which can be produced by different preparation methods, such as thermal activation, catalytic activation using metals, and the carbonization of mesoporous organic aerogels or polymer blends. Disordered mesoporous carbon has isolated or irregularly interconnected mesopores, and the distribution of pore sizes is relatively wider than ordered mesoporous carbons.

In the activation method, micropores are enlarged by oxidation. The activation method may be a physical activation process, e.g. involving the thermal pyrolysis of materials at a relatively low temperature (e.g. 400 to 900 °C), and then controlled gasification at a higher temperature (e.g. 800 to 1000 °C) with an oxidising agent such as water (steam), carbon dioxide, air, or any mixture of these gases. The activation method may be a chemical activation process, e.g. involving the thermal decomposition of carbon precursor impregnated with suitable chemical activating agents at temperatures ranging from 400 °C to 700 °C; chemical activating agents may be selected from zinc chloride ($ZnCl_2$), aluminium chloride ($AlCl_3$), magnesium chloride ($MgCl_2$), sodium hydroxide (NaOH), potassium hydroxide (KOH), sodium carbonate ($Na_2CO_3$), and phosphoric acid ($H_3PO_4$).

A catalytic activation using metal ions involves subjecting a carbon precursor to catalytic activation in the presence of metal ions such as Fe, Ni, Co. These metal ions act as catalysts, thereby accelerating the activation process of chars and lead to the production of a structure with a larger volume of mesopores.

The template method may be an endo-template or an exo-template method. In an endo-template method, a carbon material is formed around templates of mesopore size (i.e. from 2 to 50 nm) and then the template removed to leave a carbon material with mesopores within its structure. An exo-template method involves depositing carbon into an already porous matrix (such as a zeolite) and the removing the matrix to leave a mesoporous carbon material.

The endo-template method may be a hard or soft template method. A soft template method involves uses amphiphilic organic molecules as templates. Amphiphilic organic molecules can self-assemble form micelles within a carbon precursor, and then the precursor treated, e.g. by calcination, to convert it to carbon and remove the amphiphilic organic molecules, leaving a mesoporous carbon. In a hard template method, organic or inorganic templates are used that are already of mesopore size, i.e. 2 to 50 nm; the templates are incorporated into a carbon precursor, and the precursor treated to form a carbon material, and the templates then removed. The templates may be formed *in situ* within the carbon precursor or the carbon material.

In a preferred embodiment, the mesoporous carbon material has been made by an endo-template technique using inorganic particles as templates. The inorganic particles may be selected from silica, metal carbides, metal organic frameworks and inorganic particles of metal salts. The inorganic particles may be selected from alkali metal halides and sulphates, alkali earth metal oxides, transition metal oxides. The inorganic particles may be selected from NaCl, KCl, MgO, $CaCO_3$, ZnO, Zn, $Na_2SO_4$, $MnO_2$, iron oxides such as $Fe_3O_4$, ferrites such as $MnFe_2O_4$. The inorganic particles may be incorporated into a carbonaceous precursor, and the carbonaceous precursor treated (typically heat treated) to convert it to carbon and the template then removed to form a mesoporous carbon. The carbonaceous precursor may be an organic compound. The organic compound may be selected from a polymer, pitch, and non-polymeric organic molecules such as pyrroles, aniline, amino acids, lignosulfonate, mono- or disaccharides. The polymers may be selected from synthetic polymers such as PVA PAN, proteins, a carbohydrate such as polysaccharides, phenolic resins. The inorganic particles may be removed by contacting the inorganic particles with a suitable liquid that dissolves or degrades the inorganic particle. The suitable liquid may be aqueous, optionally aqueous and acidic, e.g. containing an acid such as HCl, $H_2SO_4$, citric acid, acetic acid. In a preferred embodiment, the inorganic template particles have a particle size of 1 to 10 nm.

In a preferred embodiment, the mesoporous carbon material is made by an endo-template technique using inorganic particles as templates, wherein the inorganic particles comprise MgO, and the mesoporous carbon is made by dispersing the inorganic particles comprising MgO or a thermally decomposable Mg compound in a polymer, preferably PVA, subjecting the PVA comprising the inorganic particles comprising MgO to carbonisation, and then removing the inorganic particles comprising MgO using a suitable liquid, e.g. an aqueous acid, e.g. an acid selected from HCl, $H_2SO_4$, citric acid, acetic acid. The polymer may be selected from poly (vinyl alcohol) (PVA), coal tar pitch, hydroxyl propyl cellulose, poly (ethylene terephthalate), poly (vinyl pyrrolidone, polyacrylamide), and phenolic resins. The inorganic particles comprising MgO may be formed in-situ in the polymer, e.g. by dispersing a thermally decomposable Mg compound (e.g. a compound selected from acetate, citrate, gluconate, $Mg(NO_3)_2$, $Mg(OH)_2$, and $MgCO_3$) in the polymer and subjecting the polymer to a heat treatment (e.g. from 700 to 1000 °C) to form MgO nanoparticles within carbon, and then removing the MgO nanoparticles, e.g. by contacting the carbon containing the MgO nanoparticles to an aqueous acid. Mg gluconate has been found to give mesopores within the carbon of 2 to 4 nm. The wt:wt ratio of inorganic particles (preferably MgO) to polymer (preferably PVA) is preferably between 1:10 and 10:1, preferably from 5: to 10:1 - this gives a higher BET surface area. Commercially available mesoporous carbon produced using MgO as a template is commercially available, e.g. Toyo Tanso Co., Ltd (Japan) as CNovel™, e.g. grade MH-18. However, while such mesoporous carbon has mesoporosity, in itself, it performs poorly at low(er) humidity conditions. As shown in the Examples, if it is subjected to a size reduction, this increases the macroporosity in the carbon material, enhancing its performance at the same conditions.

The mesoporous carbon may have a BET surface area of at least 200 m²/g, optionally at least 300 m²/g, at least 500 m²/g, optionally at least 800 m²/g, at least 900 m²/g, optionally at least 1000 m²/g, at least 1100 m²/g, optionally at least 1200 m²/g, at least 1300 m²/g, optionally at least 1400 m²/g. The mesoporous carbon may have a BET surface area of from 200 m²/g to 1800 m²/g, optionally from 300 m²/g to 1200 m²/g, optionally from 400 m²/g to 1000 m²/g, optionally from 500 m²/g to 800 m²/g. The mesoporous carbon may have a BET surface area of from 800 m²/g to 1800 m²/g, optionally from

900 m$^2$/g to 1800 m$^2$/g, optionally from 1000 m$^2$/g to 1800 m$^2$/g, optionally from 1100 m$^2$/g to 1700 m$^2$/g, optionally from 1200 m$^2$/g to 1700 m$^2$/g, optionally from 1200 m$^2$/g to 1600 m$^2$/g, optionally from 1300 m$^2$/g to 1600 m$^2$/g. The BET surface area as described herein is determined via physisorption of N$_2$, with the BET-Method (Braeuer-Emmett-Teller-Method), which may be in accordance with ISO 9277:2022.

The mesoporous carbon may have a total BJH/cumulative pore volume $V_{tot}$ cm$^3$/g (i.e. a cumulative pore volume from 2 nm upwards, including pores from 2 nm to 50 nm and from 50 nm upwards) of at least 1.3 cm$^3$/g, preferably at least 1.5 cm$^3$/g, more preferably at least 2 cm$^3$/g, more preferably at least 2.1 cm$^3$/g, more preferably at least 2.2 cm$^3$/g, more preferably at least 2.3 cm$^3$/g, more preferably at least 2.4 cm$^3$/g, more preferably at least 2.5 cm$^3$/g. The mesoporous carbon may have a total BJH/cumulative pore volume $V_{tot}$ cm$^3$/g (i.e. a cumulative pore volume from 2 nm upwards, including pores from 2 nm to 50 nm and from 50 nm upwards) of from 1.3 cm$^3$/g to 3 cm$^3$/g, preferably from 1.5 cm$^3$/g to 3 cm$^3$/g, more preferably from 2 cm$^3$/g to 3 cm$^3$/g, more preferably from 2 cm$^3$/g to 2.7 cm$^3$/g, more preferably from 2.3 cm$^3$/g to 2.7 cm$^3$/g, more preferably from about 2.4 cm$^3$/g to 2.6 cm$^3$/g, e.g. about 2.5 cm$^3$/g. BJH pore volume distributions are determined using the BJH analysis method, also known as Barrett-Joyner-Halenda analysis method. As is known in the art, the BJH analysis method uses the Kelvin equation to translate relative pressure values into pore diameters and then employs the BJH equation to calculate the pore size distribution.

The mesoporous carbon may have a BJH cumulative pore volume for pores of more than 50 nm ($V_{>50\,nm}$ [cm$^3$/g]) of at least 0.2 cm$^3$/g, preferably at least 0.3 cm$^3$/g, more preferably at least 0.4 cm$^3$/g. The mesoporous carbon may have a BJH cumulative pore volume for pores of more than 50 nm ($V_{>50\,nm}$ [cm$^3$/g]) of from 0.2 cm$^3$/g to 1 cm$^3$/g, preferably 0.3 cm$^3$/g to 0.8 cm$^3$/g, more preferably 0.4 cm$^3$/g to 0.8 cm$^3$/g.

The mesoporous carbon may have a BJH cumulative pore volume for pores of from 2 to 50 nm and more ($V_{2-50\,nm}$ [cm$^3$/g]) of at least 1 cm$^3$/g, preferably at least 1.3 cm$^3$/g, more preferably at least 1.5 cm$^3$/g, more preferably at least 1.6 cm$^3$/g, more preferably at least 1.8 cm$^3$/g, more preferably at least 1.9 cm$^3$/g. The mesoporous carbon may have a BJH cumulative pore volume for pores of from 2 to 50 nm and more ($V_{2-50\,nm}$ [cm$^3$/g]) of from 1 cm$^3$/g to 2.5 cm$^3$/g, preferably from 1.3 cm$^3$/g to 2.5 cm$^3$/g, preferably from 1.5 cm$^3$/g to 2.5 cm$^3$/g, preferably from 1.6 cm$^3$/g to 2.5 cm$^3$/g, preferably from 1.8 cm$^3$/g to 2.5 cm$^3$/g, preferably from 1.9 cm$^3$/g to 2.5 cm$^3$/g.

The mesoporous carbon may have a ratio of (i) BJH cumulative pore volume for pores of more than 50 nm divided by (ii) total BJH/cumulative pore volume $V_{tot}$ cm$^3$/g (i.e. a cumulative pore volume from 2 nm upwards, including pores from 2 nm to 50 nm and from 50 nm upwards) of at least 0.08, preferably at least 0.1, preferably at least 0.11, preferably at least 0.12, preferably at least 0.14, preferably at least 0.15, preferably at least 0.16, preferably at least 0.17, preferably at least 0.18. The mesoporous carbon may have a ratio of (i) BJH cumulative pore volume for pores of more than 50 nm divided by (ii) total BJH/cumulative pore volume $V_{tot}$ cm$^3$/g (i.e. a cumulative pore volume from 2 nm upwards, including pores from 2 nm to 50 nm and from 50 nm upwards) of from 0.08 to 0.25, preferably 0.1 to 0.25, preferably 0.11 to 0.25, preferably 0.12 to 0.25, preferably 0.14 to 0.25, preferably 0.15 to 0.24, preferably 0.16 to 0.23, preferably 0.17 to 0.22, preferably 0.18 to 0.21.

The mesoporous carbon support may have a BJH adsorption average pore width (4V/A) [nm], where V is the total BJH pore volume [m$^2$/g] and A is the BET surface area [m$^2$/g] of from 1 nm to 10 nm, optionally from 2 nm to 10 nm, optionally from 3 nm to 10 nm, optionally from 4 nm to 10 nm, optionally from 5 nm to 10 nm, optionally from 5 nm to 9 nm, optionally from 5 nm to 8 nm, optionally from 5 nm to 8 nm, optionally from 5 nm to 7 nm, optionally from 5 nm to 6 nm.

**Noble metal nanoparticles**

In an embodiment, the noble metal of the noble metal nanoparticles is Pt, Ir, Rh, Pd or Au. "Noble metal" may also be termed "precious metal" herein and for the purposes of this disclosure, the terms are synonymous with one another.

**Less noble metal M**

"Less noble metal" indicates that the less noble metal has a lower standard electrode potential than the noble metal. The nobility of a metal is determined by its standard potential (also referred to as "standard electrode potential" or "standard reduction potential"). The standard potential is the measure of the individual potential of a reversible electrode at standard state, i.e. with solutes at an effective concentration of 1 mol dm$^{-3}$ and gases at a pressure of 1 atm. Values for standard potentials of all common metals are tabulated at 25 °C and with reference to a standard hydrogen electrode (SHE). Metals having a higher standard potential (that is a more positive standard potential) are more noble than metals with a lower standard potential. The nobility of a metal with respect to other metals thus can easily by determined by the position of the metal within the so-called galvanic series, which lists the individual metals based on their standard potentials. Tables of standard potentials can be found for instance, in Allen J. Bard and Larry R. Faulkner: "Electrochemical Methods,

Fundamentals and Applications" 2001, 2nd Edition, ISBN 978-0-471-04372-0, John Wiley & Sons, Inc., pages 808-809; Therefore, the term "less noble metal", as used in the present context, refers to the different standard electrode potential between the two metals; the noble metal (NM) and the alloying (sacrificial, "less noble") metal (M), in an electrolyte, wherein the less noble metal will be galvanically corroded (displaced) due to a lower electrode potential than the nobler one (the noble metal). In some embodiments, the noble metal is in ionic state (cation), while the sacrificial, less noble metal is in the metallic state passivated by an oxide layer.

In an embodiment, the less noble metal M is chosen from Cu, Ni, Co, Fe, Ag, Cr, Ti, Pb, Mo, W, Zn, Y, Ce, Nd, Gd, Pd or a mixture thereof. In an embodiment, the less noble metal M is chosen from Cu, Ni, Co, Fe, Ag, Mo, W, Zn, Cr, Pb, Ti or a mixture thereof. In an embodiment, the less noble metal M is chosen from Cu, Ni, Co or a mixture thereof. "Less noble metal" may also be termed "less precious metal", "non-noble metal" and "non-precious metal" herein and for the purposes of this disclosure, all of these terms are synonymous with one another.

In an embodiment, the noble metal is selected from Pt, Ir, Rh, Pd or mixture thereof and the less noble metal is selected from Cu, Ni, Co, Fe, Ag, Cr, Ti, Pb, Mo, W, Zn, Y, Ce, Nd, Gd, Pd or a mixture thereof. In an embodiment, the noble metal is selected from Pt and Pd and the less noble metal is selected from Cu, Ni, Co, Fe, Ag, Mo, W, Zn, Cr, Pb, Ti or a mixture thereof. In an embodiment, the noble metal is Pt and the less noble metal is selected from Cu, Ni, Co or a mixture thereof.

**Composite material**

In a first aspect, the present disclosure provides a composite material, the composite material comprising composite particles comprising particles of a mesoporous carbon support material having dispersed on their surfaces noble metal nanoparticles and/or noble metal-M alloy nanoparticles and optionally particles of the elemental metal M or metal oxide $MO_y$, wherein y is >0 to a stoichiometric value of the metal oxide, wherein M is a less noble metal than the noble metal, wherein the composite particles have a BJH average pore diameter of from 2 to 50 nm and a particle size D90, as measured by laser diffraction and volume distribution, of 10 $\mu$m or less.

The composite material may comprise composite particles comprising particles of a mesoporous carbon support material having dispersed on their surfaces noble metal nanoparticles and/or noble metal-M alloy nanoparticles and particles of the elemental metal M or metal oxide $MO_y$, wherein y is >0 to a stoichiometric value of the metal oxide, wherein M is a less noble metal than the noble metal, wherein the composite particles have a BJH average pore diameter of from 2 to 50 nm and a particle size D90, as measured by laser diffraction and volume distribution, of 10 $\mu$m or less; the composite material comprising the particles of the elemental metal M or metal oxide $MO_y$ may be termed an intermediate composite material.

Various statements describing a 'double passivation method' and possible options for the double passivation method are given below:

1. This composite material may be formed in a method for forming supported noble metal nanoparticles and/or noble metal-M alloy nanoparticles composite, M being a less noble metal galvanically displaced to deposit the noble metal, the method comprising the following steps:

(a) providing a M/S precursor material of metal particles, M, on electrically conductive support particles, which are a mesoporous carbon support material, S, where M is one or more metal having lower standard electrode potential than the noble metal;

(b) suspending the M/S precursor material in a liquid medium, the liquid medium having a pH at which an in-situ passivating oxide is thermodynamically formed at least on the surface of the metal M particles being exposed to the liquid medium, forming a passivated $MO_y$/S suspension, y being > 0 up to a stoichiometric M-oxide value;

(c) providing an adsorptive gas to the $MO_y$/S suspension, the adsorptive gas being selectively adsorbable on the noble metal to be deposited;

(d) adding a noble metal precursor to the $MO_y$/S suspension, thereby depositing as a reaction product crystalline noble metal nanoparticles and/or crystalline noble metal-M alloy nanoparticles on the support particles by a galvanic displacement reaction; and

(e) separating and washing the as-synthesized reaction product. Such a method and its products are disclosed in WO2020/187933 and incorporated herein by reference in its entirety; this may be termed a double passivation method. If a size reduction is carried out as described herein, it may be carried out at any stage of the 'double passivation method', e.g. before step (a) so before M is deposited on the mesoporous carbon support material, or after step (a) and before step (b), or after step (b) and before step (c), or after step (c) and before step (d) or after step (d) and before step (e), or after step (e).

2. The double passivation method according to statement 1, wherein the metal M of the M/S precursor in step (a) is at least partially oxidized forming an ex-situ passivated M+MO/S precursor.

3. The double passivation method according to any one of statements 1-2, where the liquid medium is water, an alcohol having 1-7 carbon atoms, $CH_4O$ to $C_7H_{16}O$, or a mixture thereof, or an aqueous solution of said alcohol(s).

4. The double passivation method according to any one of statements 1-3, wherein the pH of the liquid medium is adjusted before, during and/or after suspending the M/S precursor material and/or at least partially ex-situ passivated M+MO/S precursor.

5. The double passivation method according to any one of statements 1-4, wherein the passivated $MO_y/S$ suspension is saturated with the adsorptive gas before addition of the noble metal precursor.

6. The double passivation method according to statement 5, wherein the adsorptive gas is supplied from an external source, and/or at least partially formed in-situ in the suspension.

7. The double passivation method according to any one of statements 5 or 6, wherein addition of the adsorptive gas is continued during addition of the noble metal precursor.

8. The double passivation method according to any one of statements 1-7, wherein the noble metal precursor is a salt or the corresponding acid of the salt, soluble in the liquid medium.

9. The double passivation method according to any one of statements 1-8, wherein the noble metal is Pt, Ir, Rh, Pd or Au.

10. The double passivation method according to any one of statements 1-9, wherein the adsorptive gas is chosen from carbon monoxide (CO), hydrogen ($H_2$), methanethiol (MeSH) or hydrogen sulphide (HS).

11. The double passivation method according to any one of statements 1-10, wherein the noble metal is Pt or Pd, and the adsorptive gas is CO.

12. The double passivation method according to any one of statements 1-10, wherein the noble metal is Pd, and the adsorptive gas is $H_2$.

13. The double passivation method according to any one of statements 1-12, where the less noble metal M is chosen from Cu, Ni, Co, Fe, Ag, Cr, Ti, Pb, Sn, Mo, W, Zn, Y, Gd, Pd, or a mixture thereof.

14. The double passivation method according to any one of statements 1-13, wherein the support material is an electrically conductive material having an electrical conductivity greater than the conductivity of the formed passivating M-oxide selected form carbon material, ceramic material, or a composite material.

15. The double passivation method according to statement 14, wherein the carbon material is conductive carbon particles, chosen from; carbon black, carbon nanotubes (CNTs), graphite or graphene, or derivatives thereof.

16. The double passivation method according to statement 14, wherein the ceramic material is ceramic particles chosen from; antimony tin oxide (ATO), fluorine doped tin oxide (FTO), indium tin oxide (ITO) or titanium oxynitride ($TiO_xN_y$). The conductive ceramic may include Sb doped $SnO_2$.

17. The double passivation method according to any one of statements 1-16 where the washing in step (e) includes re-dispersing the as-synthesized reaction product in fresh liquid medium and filtering at least once.

18. The double passivation method according to statement 17, where the washed and filtered as-synthesized reaction product is dried.

19. The double passivation method according to any one of statements 1-18, comprising further step (f) of thermally annealing the as-synthesized product.

20. The double passivation method according to statement 19, where the thermally annealing step (f) is performed in an inert, oxygen-free and/or reducing atmosphere, at a temperature of between 450 to 1200 °C.

The intermediate composite material described above may be subjected to an annealing process to produce a composite material comprising noble metal nanoparticles and/or noble metal-M alloy nanoparticles, on the mesoporous carbon support material, where M is a less noble metal galvanically displaced by the noble metal in cationic state, the said composite being optionally obtainable by the double passivation method described above, the said composite material is an annealed reaction product comprising highly dispersed noble metal nanoparticles and/or noble metal-M nanoparticles on the support material.

The annealing process may involve thermally annealing in an inert or reducing atmosphere. The purpose of thermal annealing is alloying the remaining $MO_y$ particles, which becomes thermally reduced to elemental M, with the noble metal and/or noble metal-M alloy nanoparticles, and possibly ordering of the noble metal-M alloy crystal lattice. The dry reaction product may be placed in an inert refractory crucible sealed in a high temperature stable container, such as a quartz tube, and purged by an oxygen-free gas, such as an inert gas, e.g. Ar, or a reducing gas (e.g. CO), or a mixture if inert gas and a reducing gas, e.g. $Ar/H_2$(5%). The temperature for thermal annealing is at a level effecting reduction of $MO_y$ to M. Without being bound by the theory it is believed that the metal oxide is reduced by reaction with carbon support material. Typically, the annealing temperature is between 450 - 1200 °C, e.g. between 500 and 900 °C, preferably 600 - 800 °C. Treatment time and temperature may vary and may be seconds to weeks. For practical reasons, the thermal annealing treatment time may be from 1 minute to a week, preferably from 1 minute to 1 day. The annealing treatment time depends on the temperature and the metals in the alloy. When annealing at 450 °C the alloying process can be very slow, especially in specific metals which do not mix very well (for example Ni is more difficult to alloy with Pt than Cu). On the other hand, if a higher temperature is used, e.g. 800 °C or above, the kinetics may become so fast that only one, or a few seconds, at the upper temperature is already enough. The sealed container is preferably purged with an inert (e.g. Ar or $N_2$) or reducing gas (e.g. $Ar/H_2$(5%) mixture or CO) during the entire thermal annealing treatment. Heating rate is not critical and can vary from very slow (for example 0.1 K/min) to as fast as possible (for example the product material is introduced in a pre-heated furnace). The heating rates should typically be between 1 and 30 K/min, such as between 2 and 15 K/min.

The cooling rate may be important to control as slower cooling can result in more ordering of the crystal lattice of the nanoparticles. Thus, cooling can be from as slow as 0.1 K/min to as fast as one can cool in liquid nitrogen. Typically, the cooling rate should be from 1 to 20 K/min, such as from 3 to 10 K/min. It should also be understood that ordering of the nanocrystal particles can also be achieved during the thermal annealing, e.g. by using different annealing temperatures and holding times, before cooling, or combined with controlled cooling.

**Composite particles**

The composite particles preferably have a BJH average pore diameter of from 2 nm to 50 nm, preferably from 2 nm to 20 nm, preferably from 2 nm to 10 nm.

The particle size as described herein (e.g. D10, D50, D90 or D95) may be determined by laser diffraction using volumetric or numeric distribution and may be carried out in accordance with ISO 13320:2020. The particle size as described herein (e.g. D10, D50, D90 or D95) may be determined by laser diffraction using volumetric or numeric distribution as described in the Examples.

The composite particles preferably have a particle size D90, as measured by laser diffraction and volume distribution, of 10 µm or less, preferably 8 µm or less, preferably 6 µm or less, preferably 5 µm or less, preferably 4 µm or less, preferably 3 µm or less. preferably 2 µm or less. The composite particles preferably have a particle size D90, as measured by laser diffraction and volume distribution, of 0.1 µm to 10 µm, preferably 0.1 µm to 8 µm, preferably 0.1 µm to 6 µm, preferably 0.1 µm to 5 µm, preferably 0.1 µm to 4 µm, preferably 0.1 µm to 3 µm, preferably 0.1 µm to 2 µm.

The composite particles preferably have a particle size D95, as measured by laser diffraction and volume distribution, of 10 µm or less, preferably 8 µm or less, preferably 6 µm or less, preferably 5 µm or less, preferably 4 µm or less, preferably 3 µm or less. preferably 2 µm or less. The composite particles preferably have a particle size D95, as measured by laser diffraction and volume distribution, of 0.1 µm to 10 µm, preferably 0.1 µm to 8 µm, preferably 0.1 µm to 6 µm, preferably 0.1 µm to 5 µm, preferably 0.1 µm to 4 µm, preferably 0.1 µm to 3 µm, preferably 0.1 µm to 2 µm.

The composite particles preferably have a particle size D50, as measured by laser diffraction and volume distribution, of 10 µm or less, preferably 8 µm or less, preferably 6 µm or less, preferably 5 µm or less, preferably 4 µm or less, preferably 3 µm or less. preferably 2 µm or less. The composite particles preferably have a particle size D50, as measured by laser diffraction and volume distribution, of 0.1 µm to 10 µm, preferably 0.1 µm to 8 µm, preferably 0.1 µm to 6 µm, preferably 0.1 µm to 5 µm, preferably 0.1 µm to 4 µm, preferably 0.1 µm to 3 µm, preferably 0.1 µm to 2 µm. The composite particles preferably have a particle size D50, as measured by laser diffraction and volume distribution, of 0.5 µm to 10 µm, preferably 0.5 µm to 8 µm, preferably 0.5 µm to 6 µm, preferably 0.5 µm to 5 µm, preferably 0.5 µm to 4 µm, preferably 0.5 µm to 3 µm, preferably 0.5 µm to 2 µm.

The composite particles preferably have a particle size D50, D90 and D95, as measured by laser diffraction and volume distribution and all of D50, D90 and D95 of 10 μm or less, preferably 8 μm or less, preferably 6 μm or less, preferably 5 μm or less, preferably 4 μm or less, preferably 3 μm or less. preferably 2 μm or less, and optionally a D10 as set out below. The composite particles preferably have a particle size D50, D90 and D95, as measured by laser diffraction and volume distribution, and all of D50, D90 and D95 may from 0.1 μm to 10 μm, preferably 0.1 μm to 8 μm, preferably 0.1 μm to 6 μm, preferably 0.1 μm to 5 μm, preferably 0.1 μm to 4 μm, preferably 0.1 μm to 3 μm, preferably 0.1 μm to 2 μm, and optionally a D10 as set out below. The composite particles preferably have a particle size D50, D90 and D95, as measured by laser diffraction and volume distribution, and all of D50, D90 and D95 may from 0.5 μm to 10 μm, preferably 0.5 μm to 8 μm, preferably 0.5 μm to 6 μm, preferably 0.5 μm to 5 μm, preferably 0.5 μm to 4 μm, preferably 0.5 μm to 3 μm, preferably 0.5 μm to 2 μm, and optionally a D10 as set out below.

The composite particles preferably have a particle size D10, as measured by laser diffraction and volume distribution, of 5 μm or less, preferably 3 μm or less, preferably 1 μm or less, preferably 0.8 μm or less, preferably 0.7 μm or less. The composite particles preferably have a particle size D10, as measured by laser diffraction and volume distribution, of 0.01 μm to 5 μm, preferably 0.01 μm to 3 μm, preferably 0.01 μm to 2 μm, preferably 0.01 μm to 1 μm, preferably 0.1 μm to 5 μm, preferably 0.1 μm to 3 μm, preferably 0.1 μm to 2 μm, preferably 0.1 μm to 1 μm.

The composite particles preferably have a particle size D50, as measured by laser diffraction and numeric distribution, of 5 μm or less, preferably 4 μm or less, preferably 3 μm or less. preferably 2 μm or less, preferably 1 μm or less, preferably 0.8 μm or less, preferably 0.7 μm or less, preferably 0.6 μm or less. The composite particles preferably have a particle size D50, as measured by laser diffraction and numeric distribution, of 0.1 μm to 5 μm, preferably 0.1 μm to 4 μm, preferably 0.1 μm to 3 μm, preferably 0.1 μm to 2 μm, preferably 0.1 μm to 1 μm, preferably 0.1 μm to 0.8 μm, preferably 0.1 μm to 0.7 μm, preferably 0.1 μm to 0.6 μm. The composite particles preferably have a particle size D50, as measured by laser diffraction and volume distribution, of 0.5 μm to 10 μm, preferably 0.5 μm to 8 μm, preferably 0.5 μm to 6 μm, preferably 0.5 μm to 5 μm, preferably 0.5 μm to 4 μm, preferably 0.5 μm to 3 μm, preferably 0.5 μm to 2 μm.

The composite particles preferably have a particle size D10, as measured by laser diffraction and numeric distribution, of 4 μm or less, preferably 3 μm or less, preferably 1 μm or less, preferably 0.8 μm or less, preferably 0.7 μm or less. The composite particles preferably have a particle size D10, as measured by laser diffraction and numeric distribution, of 0.01 μm to 4 μm, preferably 0.01 μm to 3 μm, preferably 0.01 μm to 2 μm, preferably 0.01 μm to 1 μm, preferably 0.01 μm to 0.5 μm, preferably 0.1 μm to 5 μm, preferably 0.1 μm to 3 μm, preferably 0.1 μm to 2 μm, preferably 0.1 μm to 1 μm, preferably 0.1 μm to 0.5 μm.

The composite particles may have a BET surface area of at least 200 $m^2/g$, optionally at least 300 $m^2/g$, at optionally at least 500 $m^2/g$, optionally at least 550 $m^2/g$, at least 600 $m^2/g$, at least 650 $m^2/g$, optionally at least 700 $m^2/g$, at least 750 $m^2/g$, optionally at least 850 $m^2/g$. The composite particles may have a BET surface area of from 200 $m^2/g$ to 1800 $m^2/g$, optionally from 300 $m^2/g$ to 1200 $m^2/g$, optionally from 400 $m^2/g$ to 1000 $m^2/g$, optionally from 500 $m^2/g$ to 800 $m^2/g$. The composite particles may have a BET surface area of from 500 $m^2/g$ to 1800 $m^2/g$, optionally from 500 $m^2/g$ to 1500 $m^2/g$, optionally from 500 $m^2/g$ to 1200 $m^2/g$, optionally from 500 $m^2/g$ to 1000 $m^2/g$, optionally from 600 $m^2/g$ to 1000 $m^2/g$, optionally from 700 $m^2/g$ to 1000 $m^2/g$, optionally from 800 $m^2/g$ to 1000 $m^2/g$.

The composite particles may have a total BJH/cumulative pore volume $V_{tot}$ $cm^3/g$ (i.e. a cumulative pore volume from 2 nm upwards, including pores from 2 nm to 50 nm and from 50 nm upwards) of at least 0.8 $cm^3/g$, preferably at least 0.9 $cm^3/g$, more preferably at least 1 $cm^3/g$, more preferably at least 1.1 $cm^3/g$, more preferably at least 1.2 $cm^3/g$, more preferably at least 1.3 $cm^3/g$, more preferably at least 1.4 $cm^3/g$. The composite particles may have a total BJH/cumulative pore volume $V_{tot}$ $cm^3/g$ (i.e. a cumulative pore volume from 2 nm upwards, including pores from 2 nm to 50 nm and from 50 nm upwards) of from 0.9 $cm^3/g$ to 2 $cm^3/g$, preferably from 1 $cm^3/g$ to 2 $cm^3/g$, more preferably from 1.1 $cm^3/g$ to 2 $cm^3/g$, more preferably from 1.2 $cm^3/g$ to 2 $cm^3/g$, more preferably from 1.3 $cm^3/g$ to 2 $cm^3/g$, more preferably from about 1.4 $cm^3/g$ to 2 $cm^3/g$.

The composite particles may have a BJH cumulative pore volume for pores of more than 50 nm ($V_{>50\,nm}$ [$cm^3/g$]) of at least 0.05 $cm^3/g$, preferably at least 0.08 $cm^3/g$, more preferably at least 0.1 $cm^3/g$. The composite particles may have a BJH cumulative pore volume for pores of more than 50 nm ($V_{>50\,nm}$ [$cm^3/g$]) of from 0.05 $cm^3/g$ to 0.5 $cm^3/g$, preferably 0.06 $cm^3/g$ to 0.5 $cm^3/g$, more preferably 0.08 $cm^3/g$ to 0.3 $cm^3/g$, more preferably 0.1 $cm^3/g$ to 0.3 $cm^3/g$..

The composite particles may have a BJH cumulative pore volume for pores of from 2 to 50 nm and more ($V_{2-50\,nm}$ [$cm^3/g$]) of at least 0.5 $cm^3/g$, preferably at least 0.6 $cm^3/g$, more preferably at least 0.7 $cm^3/g$, more preferably at least 0.8 $cm^3/g$, more preferably at least 0.9 $cm^3/g$, more preferably at least 1.0 $cm^3/g$. The composite particles may have a BJH cumulative pore volume for pores of from 2 to 50 nm and more ($V_{2-50\,nm}$ [$cm^3/g$]) of from 0.5 $cm^3/g$ to 2.5 $cm^3/g$, preferably from 0.6 $cm^3/g$ to 2 $cm^3/g$, preferably from 0.7 $cm^3/g$ to 2 $cm^3/g$, preferably from 0.8 $cm^3/g$ to 2 $cm^3/g$, preferably from 0.9 $cm^3/g$ to 2 $cm^3/g$, preferably from 1 $cm^3/g$ to 2 $cm^3/g$.

The composite particles may have a ratio of (i) BJH cumulative pore volume for pores of more than 50 nm divided by (ii) total BJH/cumulative pore volume $V_{tot}$ $cm^3/g$ (i.e. a cumulative pore volume from 2 nm upwards, including pores from 2 nm to 50 nm and from 50 nm upwards) of at least 0.08, preferably at least 0.1, preferably at least 0.11, preferably at least 0.12, preferably at least 0.14, preferably at least 0.15, preferably at least 0.16, preferably at least 0.17, preferably at least 0.18. The composite particles may have a ratio of (i) BJH cumulative pore volume for pores of more than 50 nm divided by (ii) total BJH/cumulative pore volume $V_{tot}$ $cm^3/g$ (i.e. a cumulative pore volume from 2 nm upwards, including pores from 2 nm to 50 nm and from 50 nm upwards) of from 0.08 to 0.25, preferably 0.1 to 0.25, preferably 0.11 to 0.25, preferably 0.12 to 0.25, preferably 0.14 to 0.25, preferably 0.15 to 0.24, preferably 0.16 to 0.23, preferably 0.17 to 0.22, preferably 0.18 to 0.21.

The composite particles support may have a BJH adsorption average pore width (4V/A) [nm], where V is the total BJH pore volume $[m^2/g]$ and A is the BET surface area $[m^2/g]$ of from 1 nm to 10 nm, optionally from 2 nm to 10 nm, optionally from 3 nm to 10 nm, optionally from 4 nm to 10 nm, optionally from 5 nm to 10 nm, optionally from 5 nm to 9 nm, optionally from 5 nm to 8 nm, optionally from 5 nm to 8 nm, optionally from 5 nm to 7 nm, optionally from 5 nm to 6 nm.

**Method of making a composite material**

In a second aspect, there is provided a method of making a composite material, the method comprising:

providing particles of a mesoporous carbon support material,

forming composite particles by dispersing noble metal nanoparticles and/or noble metal-M alloy nanoparticles on the surfaces of the mesoporous carbon support material, wherein M is a less noble metal than the noble metal, such that the composite particles have a BJH average pore diameter of from 2 to 50 nm and a particle size D90, as measured by laser diffraction, of 10 μm or less. In the method, preferably either:

(i) the mesoporous carbon support material has a particle size D90 of from 10 μm or less before the noble metal nanoparticles and/or noble metal-M alloy nanoparticles are dispersed on the surfaces of the mesoporous carbon support **or**

(ii) the mesoporous carbon support material has a particle size D90 of greater than 10 μm before the noble metal nanoparticles and/or noble metal-M alloy nanoparticles are dispersed on the surfaces of the mesoporous carbon support,

and, after the noble metal nanoparticles and/or noble metal-M alloy nanoparticles are dispersed on the surfaces of the mesoporous carbon support, the particles are subjected to a size reduction, such that the composite particles have the particle size D90, as measured by laser diffraction, of from 10 μm or less.

Depositing the noble metal and the less noble metal on the surfaces of the mesoporous carbon support material means depositing on both exterior surfaces of the particles and within the pores of the particles. Particles in this context refers to the primary carbon particles.

The particles of a mesoporous carbon support material may be as described above.

The method may involve deposition of a less noble metal onto a mesoporous carbon support material. The mesoporous carbon support material, before deposition of the less noble metal may have BJH average pore diameter of from 2 to 50 nm and a particle size D90, as measured by laser diffraction, of 10 μm or less. In an alternative embodiment, the mesoporous carbon support material onto which the less noble metal is deposited, may have a BJH average pore diameter of from 2 to 50 nm and a particle size D90, as measured by laser diffraction, of more than 10 μm, and then a size reduction process is carried out either (i) after the less noble metal has been deposited on the mesoporous carbon support and before the noble metal has been deposited on the mesoporous carbon support or (ii) after the less noble metal has been deposited on the mesoporous carbon support and after the noble metal has been deposited on the mesoporous carbon support.

An embodiment of the method is shown in Figure 9. In Figure 9, in step (a) the less noble (less precious) metal is deposited on the mesoporous carbon support to form a mesoporous carbon-less noble metal composite, M/C, which has a particle size D90, as measured by laser diffraction, of more than 10 μm. In step (b), a size reduction is carried out on the M/C, e.g. by milling, such the M/C has a particle size D90 of 10 μm or less. In step (c), the noble (or precious) metal (denoted PGM) is deposited on M/C to form a PGM+M/C composite material. In step (d), the PGM+M/C composite material is thermally annealed to alloy PGM and M. In step (e), the PGM+M/C composite material is then subjected to washing step (e.g. an acid wash), also termed a dealloying process, to form the final catalyst. The final catalyst may then be characterized.

The deposition of nanoparticles on the surfaces of the mesoporous carbon support material may be as described above, e.g. involving a double passivation method to form an intermediate composite material and then optionally annealing to form the composite material of the second aspect. As mentioned above, if a size reduction process is carried out, this may be carried out at any point in the double passivation method.

The mesoporous carbon support material may have a particle size D90 of from 10 μm or less before the noble metal nanoparticles and/or noble metal-M alloy nanoparticles are dispersed on the surfaces of the mesoporous carbon support. The method of making the composite material may involve first dispersing a less noble metal, optionally in the form of $MO_y$, as described above, on the mesoporous carbon support material, and then depositing noble metal on the mesoporous carbon support material, then depositing the noble metal on the mesoporous carbon support material to form the composite material of the second aspect.

If an intermediate composite material is formed, the mesoporous carbon support material may have a particle size D90 of from 10 $\mu$m or less before the intermediate material is formed.

Optionally, the mesoporous carbon support material has a particle size D90 of greater than 10 $\mu$m, and during the method of producing the composite material of the second aspect, the particles of the carbon support material are subjected to a size reduction, such that the composite particles have the particle size D90, as measured by laser diffraction, of from 10 $\mu$m or less. The method of making the composite material may involve first dispersing a less noble metal, optionally in the form of $MO_y$, as described above, on the mesoporous carbon support material, carrying out a size reduction on the mesoporous carbon support material, and then depositing the noble metal on the mesoporous carbon support material, and optionally thermally annealing, to form the composite material of the second aspect. The method of making the composite material may involve first dispersing a less noble metal, optionally in the form of $MO_y$, as described above, on the mesoporous carbon support material, and then depositing the noble metal on the mesoporous carbon support material, carrying out a size reduction on the mesoporous carbon support material, and optionally thermally annealing before or after the size reduction, to form the composite material of the second aspect.

If an intermediate composite material is formed, the size reduction may be before or after the step of depositing the noble metal on the mesoporous carbon support.

The size reduction method may comprise any suitable method for reducing the particle size of the mesoporous carbon support. The size reduction method may involve a technique selected from crushing, grinding and milling. Milling can be carried out in any suitable mill, including, but not limited to a planetary mill, a bead mill and a roll mill.

The milling may be selected from mechanical milling, media milling and jet milling. Mechanical milling may involve a technique selected from crushing between two objects (e.g. jaws or rollers or impact crushing apparatus). The impact crushing may involve a hammer mill. The mechanical milling may involve a universal mill.

The milling may involve jet milling and the jet milling apparatus may be selected from fluid bed jet mill, a spiral jet mill. The jet milling may involve using compressed air, inert gas, steam, or other fluid media.

The media milling may be wet media milling or dry media milling. In wet media milling, the mesoporous carbon support material and milling media are dispersed in a liquid during the milling process. In dry media milling, the mesoporous carbon support material and milling media are milled in a mill without liquid, i.e. dry. The media in the milling may comprise a material selected from a ceramic, a glass, a polymer, a ferromagnetic and a metal. The media may comprise a material having a suitable hardness (i.e., RHC 60-70), roundness, high wear resistance, and narrow size distribution and can include. The media in the milling may comprise a material selected from type AISI52100 chrome steel, type 316 or 440C stainless steel or type AISI1065 high carbon steel. steatite, aluminium oxide, zirconium oxide, zirconia-silica, yttria-stabilized zirconium oxide, magnesia-stabilized zirconium oxide, silicon nitride, silicon carbide, cobalt-stabilized tungsten carbide, lead-free soda lime glass and borosilicate glass.

The media may be in the form of bodies which can have any of a variety of smooth, regular shapes, flat or curved surfaces, and lacking sharp or raised edges. The media may be in the form of bodies having ellipsoidal, ovoid, spherical or right cylindrical shapes. In an even further aspect, the milling bodies are in a form selected from beads, balls, spheres, rods, right cylinders, drums or radius-end right cylinders (i.e., right cylinders having hemispherical bases with the same radius as the cylinder). Preferably, the media are spherical.

The media may be of any suitable size, e.g. having a largest dimension (diameter if spherical) of from 0.1 mm to 20 mm, optionally from 0.1 mm to 10 mm, optionally from 0.1 mm to 5 mm, optionally from 0.5 mm to 5 mm, optionally from 0.5 mm to 3 mm, optionally from 0.5 to 2 mm.

The milling speed may be at least 100 rpm, optionally at least 200 rpm, optionally at least 300 rpm, preferably at least 400 rpm, preferably at least 500 rpm, preferably at least 600 rpm. The milling speed may be from 100 rpm to 1500 rpm, optionally from 200 rpm to 1500 rpm, optionally from 300 rpm to 1500 rpm, optionally from 400 rpm to 1500 rpm, optionally from 500 rpm to 1500 rpm, optionally from 600 rpm to 1500 rpm, optionally from 300 rpm to 900 rpm, optionally 400 rpm to 800 rpm, optionally 500 rpm to 700 rpm, optionally about 600 rpm.

The milling may be carried out for a period until the desired size reduction has been achieved. The milling may be carried out for a total period of from 1 minute to 24 hours, optionally from 5 minutes to 5 hours, optionally 5 minutes to 3 hours, optionally from 30 minutes to 3 hours. The total period does not include any rest period where the milling is stopped, e.g. in order to allow the milling apparatus and the substances within the apparatus to cool.

The milling may be carried out at a milling speed and for a sufficient amount of time until a desired particle size distribution (e.g. D90 and/or D50) is reached. Suitable particle size distributions are described herein.

The milling may be wet milling in a liquid. The liquid may be an aqueous or a non-aqueous liquid. The non-aqueous liquid may be an organic solvent. The liquid may be selected from a hydrocarbon, an alcohol such an alkanol, a ketone and an aldehyde. The liquid may be a hydrocarbon selected from an aliphatic or aromatic hydrocarbon. The liquid may be selected from methanol, ethanol, butanol, hexanol, isopropanol, decane, hexane, benzene, xylene and toluene.

**Catalyst**

In a third aspect, there is provided a catalyst comprising the composite material according to the first aspect or producible by the second aspect. The catalyst may further comprise an ionomer (such as a perfluoro sulfonic acid ionomer) and/or a binder.

The catalyst may be a catalyst for catalyzing an electrochemical reaction. For instance, the catalyst is a catalyst for an anode hydrogen oxidation reaction (HOR) and/or a cathode oxygen reduction reaction (ORR). Preferably, the catalyst is an ORR-catalyst. For instance, the catalyst is a fuel cell catalyst, i.e. a catalyst, which is employed at the anode (catalyzing HOR) or cathode (catalyzing ORR) of a fuel cell, such as a PEM (proton exchange membrane) fuel cell.

Accordingly, also provided is a PEM fuel cell or PEM electrolyzer comprising the catalyst as described herein.

**Method of catalysing a chemical reaction**

In a fourth aspect, there is provided a method of catalysing a chemical reaction, the method comprising contacting one or more reactants with a catalyst according to the third aspect. The reactants may comprise oxygen. The reactants may comprise hydrogen.

The chemical reaction may be an electrochemical reaction, e.g. a HOR and/or a ORR.

This disclosure further provides the use of the catalyst in an energy conversion device, such as a fuel cell, e.g. a proton exchange membrane fuel cell.

## Examples

In the following Examples PtCo catalysts on various types of carbon support are described. The properties of the composite materials were analysed at various stages of the synthesis process.

**Experimental**

**Pulse Combustion Reactor Synthesis**

In the case of the synthesis of carbon supported M/MPC (M = non-noble metal, e.g. Co, and MPC = mesoporous carbon) composite materials on mesoporous carbon, the feedstock suspension consisted of suspending 30 g of Toyo Tanso MH-18 mesoporous carbon material and a metal acetate hydrate in 1500 mL of Milli-Q water (18.2 M$\Omega$ cm$^{-1}$). In the case of Co/MPC composite, 56.5 g of cobalt acetate tetrahydrate (Sigma-Aldrich) was used. Each feedstock suspension was then continuously stirred with a magnetic stirrer while being fed into the reactor by a peristaltic pump.

In relation to this work, briefly, the materials were synthesized in a Pulse Combustion Reactor setup comprising a Helmholtz-type pulse combustor. Air is supplied to the combustor by a blower through an aerodynamic valve; the flow is measured by using a thermal mass flow meter. Fuel gas (propane) is supplied to the combustor at a constant flow and pressure by using a thermal mass flow meter and controller. According to the calculation of a stoichiometric quantity of air, a ratio between fuel and air can be set by varying the motor rotating speed of the blower or changing the fuel mass flow. Additionally, propane can be diluted with nitrogen to control the frequency and amplitude of pressure oscillations in the reactor. The frequency and amplitude influence the temperature and the composition of gases in the reactor. A higher amplitude means not only a lower temperature at the same frequency but also a more efficient burning of fuels. This in turn means that there is less oxygen present in the reacting hot zone. In the neck of the Helmholtz combustor there is a secondary gas inlet. This gas inlet is for maintaining or enhancing the reductive atmosphere by injecting acetylene into the stream of flue gases from the chamber of the combustor. The flow of acetylene is controlled with a thermal mass flow meter and controller. The neck of the combustor is coupled to the reactor pipe with a T-section that makes it possible to spray the precursors into the hot zone of the reactor, where thermal deposition of metals salts such as cobalt acetate to metal/metal-oxide nanoparticles occurs and the Co/MPC composite is formed.

Hot gas with SMNPs then travels through the cold zone, where temperature is maintained at ~150 °C with indirect flow of cooling air. Lastly, the Co/MPC composite reaches the electrostatic filter where the product is collected.

**Milling**

The Co/MPC composite was mixed with hexane to form a slurry. The slurry was then milled in a 500 mL milling jar (Planetary Mill PM-100 from company Retsch) with 1 mm ZrO balls at 300 or 600 rpm for 1 hour (or 400 rpm with PM-400).

Afterwards, the slurry together with the ZrO balls was transferred into a large crystallizing dish and dried over night at room temperature and then for 2 more hours at 60 °C to remove the hexane. The milled Co/MPC powder has been then sieved to separate the ZrO balls from the powder and the dry powder of the milled Co/MPC composite has been collected.

**Synthesis of Dealloyed Intermetallic Pt-Alloy Electrocatalysts**

**Double Passivation with Galvanic Displacement**

In the first step, Pt nanoparticles (NPs) were deposited onto the Co/MPC composites via double passivation galvanic displacement method reported elsewhere (e.g. in WO 2020/187933). Briefly, the Pt deposition step consists of less noble metal (M; e.g. Co) oxide passivation followed by carbon monoxide (CO) capping of Pt-based NPs formed by galvanic displacement of M after Pt-salt addition. Specifically, multigrams of Co/MPC composites prepared by using the pulse combustion reactor were suspended in a slightly basic aqueous solution. The suspensions were then ultrasonicated (ultrasound bath Iskra Sonis 4) for 3 min (degassing). Afterward, the suspensions were first purged with Ar for 45 min and then switched to CO for 15 min while stirring with a magnetic stirrer. 0.1 M $K_2PtCl_4$ (Apollo Scientific) was added to the CO-saturated suspension of Co/MPC composite with a syringe pump (WPI AL1000-220Z) while continuously purging the reaction mixture with CO. After the entire Pt-salt solution was added to the reaction mixture, the suspension was filtered and washed with Milli-Q water three more times. The obtained composites were left to dry at 50 °C overnight. Obtained are Pt+Co/MPC composite powders.

**Thermal treatment:**

In the second step, the dry Pt+Co/MPC composite powders have been subjected to a high-temperature thermal annealing to alloy Pt and Co. To achieve this, all composite powders were placed in a $Al_2O_3$ crucible. The crucibles were then put into a quartz tube that was sealed and purged with Ar for 2 h to ensure an inert atmosphere prior to raising the temperature. In the case of all experiments, the quartz tubes were purged with Ar for the entire duration of the thermal annealing process. The temperature was raised to 700 °C with a ramp of 10 K min$^{-1}$ for 24 h. Afterward, the furnace was cooled to RT with a ramp of 3 K min$^{-1}$. Obtained are Pt-Co/MPC composite powders.

**Ex-Situ Chemical Activation (Dealloying/activation)**

All thermally catalysts were subjected to the same activation (acid washing) protocol. Briefly, the process involves a 24h washing in 1 M $HNO_3$ at 80 °C. Afterward, the catalysts were washed four times with Milli-Q water (18.2 M$\Omega$ cm$^{-1}$).

**X-ray Diffraction (XRD) Analysis**

The powder XRD measurements of samples containing Co were performed on a PANalytical X'Pert PRO diffractometer with Cu K$\alpha$ radiation ($\lambda$ = 1.541874 Å) in the 2$\theta$ range from 10° to 60° with the 0.039° step per 300 s by using a fully opened Pixcel detector. Samples were prepared on a zero-background Si holder.

**Energy-Dispersive X-ray (EDX) Analysis**

Energy-dispersive X-ray (EDX) analysis was performed using a detector (SDD Ultim max 100, Oxford, UK) at 20 kV. Prior to the analysis the detector was precisely calibrated at 20 kV based on 32 analytical standards (Reference standards for X-Ray Microanalysis, Registered Standard No. 14570). To achieve maximum precision, a voltage of 20 kV, an aperture size of 30 $\mu$m, and a probe current of 400 pA were selected. Samples were prepared using the following procedure: A small amount of powder electrocatalyst sample (1-3 mg) was put on a 13 mm polished metal disk and covered with a metal disk of the same size. Samples were pelleted with a manual press until a pellet with a thickness of about 50 $\mu$m was obtained. Standard scanning electron microscope (SEM) pin mounts (Agar Scientific) covered with conductive carbon tape (Agar Scientific) were used to hold the pelleted samples.

**BET/BJH adsorption characterization**

The BET surface area (SBET), total pore volume, and pore size distribution (PSD) of the samples were determined using N2 adsorption/desorption isotherms at 77 K with an automatic Micromeritics ASAP 2020 surface area and porosity analyser. Initially, all samples were degassed at 150 °C for 3 hours under vacuum (10$^{-5}$ bar) prior to BET measurements. For the $N_2$ adsorption isotherm, gas of 99.999% purity was used at 77 K and fitted to the BET equation. The BET surface area was calculated using all data points. BJH adsorption pore distribution was analysed using the t-Plot method assuming a Harkins and Jura thickness with Halsey Faas Correction to derive the pore data ($t = 3.54 \, [\, -5 / \ln(p/p°)\,] \, ^\wedge \, 0.333$).

**Laser diffraction characterization**

A Microtrac Bluewave instrument, consisting of a Sample Delivery Controller (SDC) and an S3500 Microtrac Bluewave laser diffraction system (LDS), was used. A well-dispersed sample in ultrapure water (18.2 M$\Omega$ cm) was delivered to the LDS by the SDC. The following parameters were utilized: a run time of 10 seconds with 3 runs per sample, reflective particles, a particle refractive index of 1.53, irregular particle shape, water as the carrier fluid with a fluid refractive index of 1.33, and a flow rate of 50%. Starting suspensions were prepared in the concentration range of 0.2-0.5 mg/mL in ultrapure water. Ultrasonic bath (Sonis 60, Iskra) was used to disperse the sample until stable suspension was obtained. Suspension was added dropwise to the loading area of the SDC until the loading factor of 0.01 +/- 20% was reached. Microtrac FLEX software was used to generate reports for numeric and volume particle size distributions. The particle size as described herein (e.g. D10, D50, D90, D95) may be by laser diffraction using volumetric or numeric distribution and may be carried out in accordance with ISO 13320:2020.

**Electrochemical Evaluation via Thin Film Rotating Disc Electrode (TF-RDE) Preparation of Thin Films and the Setup**

Electrochemical measurements were conducted with a CompactStat (Ivium Technologies) in a two-compartment electrochemical cell in a 0.1 M $HClO_4$ (Merck, Suprapur, 70%, diluted by Milli-Q, 18.2 M$\Omega$ cm$^{-1}$) electrolyte with a conventional three-electrode system. Reversible hydrogen electrode (RHE, gaskatel) was used as a reference and a graphite rod as a counter electrode. The working electrode was a glassy carbon disc embedded in Teflon (Pine Instruments) with a geometric surface area of 0.196 cm$^2$. The RHE (gaskatel) reference was separated from the electrochemical cell with a salt bridge. Prior to each experiment, the two-compartment electrochemical cell was boiled in Milli-Q water for 1 h, and the electrode was polished to mirror finish with $Al_2O_3$ paste (particle size 0.05 $\mu$m, Buehler) on a polishing cloth (Buehler). After polishing, the electrodes were rinsed and ultrasonicated (Ultrasound bath Iskra Sonis 4) in a Milli-Q/isopropanol mixture for 3 min. 20 $\mu$L of 2 mg mL$^{-1}$ water-based well-dispersed electrocatalyst ink was pipetted on the glassy carbon electrode completely covering it and dried under ambient conditions, resulting in an electrocatalyst loading on the RDE electrode of 40 $\mu$g. After the drop had dried, 5 $\mu$L of Nafion solution (ElectroChem, 5% aqueous solution) diluted in isopropanol (1:50) was added. The electrode was then mounted on the rotator (Pine Instruments).

For all electrocatalysts, the electrodes with electrocatalyst films were placed in the Ar-saturated electrolyte under the potentiostatic mode (0.05 V$_{RHE}$), followed by 50 cycles of potential cycling activation (0.05-1.2 V$_{RHE}$ with a scan rate of 300 mV s$^{-1}$). At the end, the electrolyte was exchanged with a fresh one. This was followed by purging of the electrolyte with CO under the potentiostatic mode (0.05 V$_{RHE}$) to ensure successful CO adsorption. Afterward, the electrolyte was saturated with Ar. Upon successful saturation, CO electrooxidation was performed (0.05-1.0 V$_{RHE}$ with a scan rate of 20 mV s$^{-1}$). All potentials are given against the RHE.

**CCM fabrication & Single-cell (MEA) evaluation**

The cathode catalyst inks with catalysts with already an optimized ionomer-to-carbon ratio have been sprayed on to a proton-exchange membrane, e.g. fluorine-free hydrocarbon-based membrane. The single-cell (MEA) with 4 cm$^2$ active area was evaluated under 95 °C, 35/80 % RH (anode/cathode), 250/240 kPa-abs for the ORR polarization curve as well as high frequency resistance (HFR).

**High-frequency resistance (HFR) method in the Single-Cell**

The high-frequency resistance (HFR) method is a technique that involves applying a small AC signal (in this case, 5 % of DC-current) to the cell and analysing its response in the frequency domain. The HFR is measured simultaneously with the oxygen reduction reaction (ORR) polarisation data. In the provided data, the spectra were recorded at a frequency of 3200 Hz by the Frequency Resistance Analyzer (FRA), which is integrated into the fuel cell testing hardware. The ohmic resistances of the fuel cell, e.g. flow fields, GDLs, and membrane react to the applied high frequency. In this experiment, the same flow fields, GDLs and membrane are used, the same HFRs indicate that the improvement shown in the iV curves stem from the catalyst layers. As the same anode composition was used, the improvement in performance stems from the differences in the applied cathode catalysts.

**ECSA Determination in the Single-Cell**

The ECSA is determined by calculating the hydrogen adsorption charge density q (in C $cm^{-2}$) in the hydrogen underpotential deposition ($H_{UPD}$) region, which can be obtained by dividing the integrated area associated with the hydrogen-adsorption currents (typically between 0.08 V and 0.4 V) by the scan rate of the CV experiment (here 50 mV $s^{-1}$), after subtracting the double-layer charging currents. This value is then divided by the unit charge 210 $\mu$C $cm^{-2}$ (for hydrogen adsorption integrated areas) and the Pt loading L_Pt to obtain the ECSA.

$$Eq: ECSA = q/ (210 \ \mu C \ cm^{-2} * L\_Pt)$$

**Results and discussion:**

Figure 9 shows the route to make an example of a final platinum-alloy PEM fuel cell catalyst deposited on a supporting material. While the deposition of the non-noble metal and the precious metal in these Examples is by the double passivation method, as laid out in WO 2020/187933, other deposition methods can also be used, while still obtaining the benefit of the present invention.

In these Examples, the carbon material was a mesoporous-type carbon material from company Toyo Tanso with the name of CNovel MH-18. This class of carbons is typically made using so-called 'templating' methods to obtain a high degree of graphitization and also high uniformity of the porosity with pore sizes above the threshold of microporosity (<2 nm) and in the range typical for mesoporosity (2 nm - 50 nm). Mesoporous carbons can also be made using other types of methods, for instance by oxygen-annealing of standard commercial 'carbon black' microporous supports. The present invention is applicable to any sort of mesoporous carbon support.

Additionally, while the present product features presented in these Examples are achieved as a result of milling conditions, other techniques could be used. The most important aspect is using a mesoporous carbon support with a suitable size range of primary carbon particles, as described herein. Milling or size reduction may not be required for mesoporous carbon supports that have a suitable size range after synthesis. If the method does involve milling, however, this step can be performed at any point of the synthesis - e.g. on pure carbon, on the carbon after deposition of the less noble metal M or on a final catalyst material, e.g. having had nanoparticles of a precious metal deposited therein. In the present Examples, milling was carried out after deposition of the less noble metal M (Co) and before the deposition of the noble metal (Pt), since it was most suitable for this particular production method.

*Figure 9 shows the main synthesis steps used to obtain the final catalyst in these Examples.*

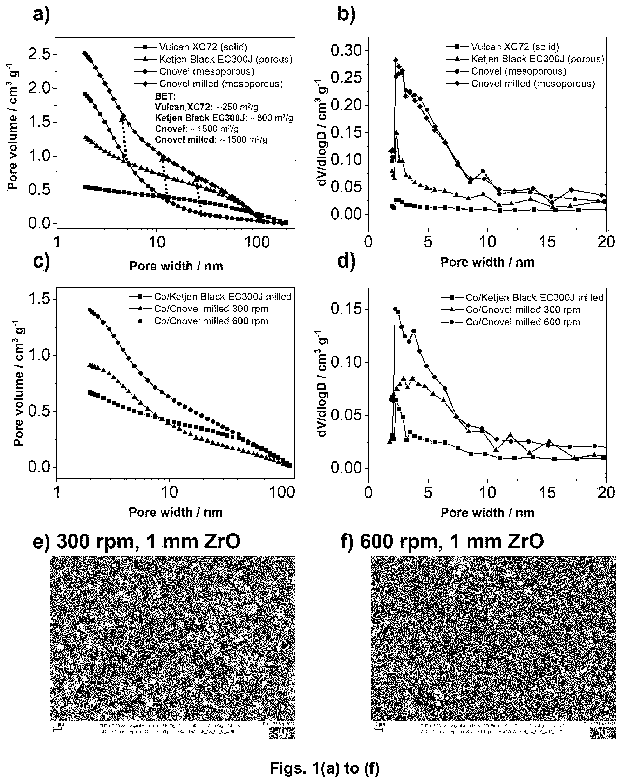

Figure 1 shows BJH adsorption data using nitrogen for various carbon supports. This data is obtained during BET evaluation where primarily the surface area of the material is measured, but secondarily the pore volume as a function of pore width. Under the measurement conditions, it was only possible to obtain data at and above 2 nm. Accordingly, thus, it is not the case that there are no pores below 2 nm, but rather, there's just no data for those pores. Nevertheless, rather evident differences can be observed when comparing different carbon supports in Figure 1a. Namely, we can clearly distinguish between the BJH adsorption spectra of a 'solid' type carbon such as Vulcan XC72 from Cabot corporation and for instance 'microporous' Ketjen Black EC300J carbon. The smaller the pore diameter, the larger the pore volume in the case of Ketjen Black EC300J. Due to the microporosity, a 'microporous' carbon such as Ketjen Black EC300J has a higher BET surface area (~800 $m^2$/g of carbon) than a 'solid' carbon such as Vulcan XC72 (~250 $m^2$/g of carbon).

In particular, Figure 10 shows: BJH adsorption comparison data of: (a) cumulative pore volume for carbons, (c) cumulative pore volume for Co/C composites, (b) differential pore volume distribution for carbons, (d) differential pore volume distribution for Co/C composites. (e) SEM image of mesoporous carbon from Toyo Tanso MH-18 milled at 300 rpm with 1 mm ZrO balls and (f) 600 rpm with also 1 mm ZrO balls.

**11**However, what is also known to a skilled person in the art, these two carbons consist of so-called 'primary particles'.

Figure 10a shows different types of pores - micropores, mesopores and macropores. While each individual primary carbon can contain micropores or mesopores, macropores are at least typically formed by agglomeration of several primary particles, i.e. between particles, not within them. Figure 10b shows an example on Ketjen Black EC300J where the primary particle is approximately 30-50 nm in diameter, and contains micropores. These spherical 30-50 nm particles agglomerate into particles constituting from many primary particles, creating a network with larger macropores. This is why in Figure 1a the pore volume with both Ketjen Black EC300J as well as Vulcan XC72 is higher than zero even at larger pore sizes outside of the mesoporosity range (>50 nm). It is, however, possible that some of such pores that form are based on agglomeration of the primary carbon particles fall within the 'mesoporosity range'.

If we now move to the carbon CNovel ® MH-18 grade from Toyo Tanso, we see that this carbon has an even higher BET surface area of ~1500 $m^2$/g and exhibits a different BJH adsorption behaviour compared to the Ketjen Black EC 300J. Namely, a much higher proportion of the pore volume in the lower mesopore range (4-10 nm) for the CNovel carbon in comparison to the Ketjen Black EC300J; in other words, it has a very large proportion of pores in the lower mesopore range (most, if not all, of which are the pores within the carbon particles themselves, rather than pores between particles), and a very small amount of pores of larger size (the pore of larger size mostly deriving from the pores formed between the primary carbon particles). On the opposite side, Ketjen Black EC300J contains higher pore volume in mid to upper mesopore range (10-50 nm) and lower macropore range (50-100 nm) compared to CNovel carbon. As mentioned above, this can be attributed to agglomeration of primary carbon particle in the case of Ketjen Black EC300J, i.e. the pores measured in Ketjen Black EC300J using the BJH technique are the pores between carbon particles, not within the carbon particles.

The present inventors have found that when CNovel carbon is wet milled in a planetary ball mill using 1 mm ZrO balls, the balance between small mesopores (4-10 nm) and larger pores can be changed significantly. The BJH data shows only the case of using 600 rpm where visibly the observed pore volume increases in the entire pore width range measured (note that BET stays within the range of measurement error). Additionally, the now milled CNovel MH-18 carbon material now exhibits a very similar trend of pore volume in the 10-100 nm range as that of Ketjen Black EC300J. Figures 1c and 1d, on the other hand compares three composite materials - the milled (300 rpm, 1 mm ZrO balls) composite of cobalt nanoparticles on Ketjen Black EC300J with the two milled (300 rpm and 600 rpm respectively, both 1 mm ZrO balls) composites of cobalt nanoparticles on CNovel MH-18 carbon. We see a clear difference in the mesoporous region till 10 nm of pore width and a very similar trend above 10 nm of pore width.

The result of milling the mesoporous carbon combines the advantages of mesoporosity within carbon particles (leading to better oxygen transport in PEM fuel cells in contrast to micropores) with the macroporosity features of 'carbon blacks'. This has not been achieved previously because typical mesoporous carbons such as CNovel MH-18 prepared by the templating method have significantly larger primary particles (> 1 $\mu$m for 'mesoporous' carbons vs for instance 30-50 nm's in the case of 'microporous' carbon Ketjen Black EC300J). The present inventors believe the carbons with the larger carbon particles do not form the 'macroporosity' networks in the same way carbon blacks with small carbon primary particles do. Previous publications (such as Nature Communications volume 12, Article number: 4956 (2021)) have highlighted that PEM fuel cell catalysts based on platinum-based nanoparticles deposited on such mesoporous carbons do not perform as well as may be expected, especially at lower relative humidities. This was indicated to be because the proton conductivity decreases significantly in dry operation because of the lack of proton conduction pathways in the absence of liquid water.

Additionally, it is believed that due to higher primary carbon particle size of mesoporous carbon materials, it is very hard to uniformly coat the carbon particles with the ionomer. The lack of ionomer penetrating in the large particles means that in dry(er) conditions, enough liquid water is critical for sufficient proton conductivity. In the case this liquid water is not present in a sufficient quantity, such platinum or platinum alloy nanoparticles inside the carbon's mesopores do not receive enough protons and thus, do not contribute to the performance of the PEM fuel cell due to the high proton resistance. Consequently, while a boost in performance has in the past been observed at high relative humidities where liquid water has not been an issue, this has not been the case for low relative humidities where platinum has no longer been accessible by sufficient quantity of liquid water.

The present inventors have addressed the deficiencies previously seen with mesoporous carbon supports (particularly those made by the templating method) by increasing the macroporosity in the carbon support. The importance of the balance between microporosity and microporosity has not previously been realised. Counterintuitively, the present inventors found that by reducing the primary carbon particle size of the mesoporous carbons, this increased the relative proportion of macropores in the carbon material. In the present Examples, milling was used to break down large particles of the mesoporous carbon CNovel MH-18 into smaller particles using planetary ball milling. However, it has been discovered that not only one has to mill down the particles, but also that it is advantageous to mill the particles so that most are below 1 $\mu$m (as measured by laser diffraction) and removing the larger particles, i.e. lowering D90 to 10 $\mu$m or less, as shown below.

Figure 1e and f showcase the difference using SEM of a composite of cobalt nanoparticles on CNovel MH-18 when milled at 300 rpm or 600 rpm (with 1 mm ZrO balls in both cases). Namely, it is visible that, at 600 rpm, one generates enough energy to not only homogenize the particle size, but also break them down additionally to much smaller particle sizes below <1 $\mu$m.

Additional data is available in Tables 1 and 2 where BET, total pore volumes as well as average pore width is compared for various carbons and cobalt on carbon composites.

*Table 1: BET, total pore volume as well as average pore width data on various carbons.*

| Sample: | BET [m$^2$/g] | Total pore volume [cm$^3$/g] | BJH adsorption average pore width (4V/A) [nm] |
|---|---|---|---|
| Vulcan XC72 | 276 | 0.58 | 11.9 |
| Ketjen Black EC300J | 890 | 1.33 | 7.2 |
| CNovel | 1512 | 1.79 | 4.6 |

(continued)

| Sample: | BET [m²/g] | Total pore volume [cm³/g] | BJH adsorption average pore width (4V/A) [nm] |
|---|---|---|---|
| CNovel milled 600 rpm | 1590 | 2.36 | 5.7 |

*Table 2: BET, total pore volume* as *well* as *average pore width data on* Co/C *composites.*

| Sample: | BET [m²/g] | Total pore volume [cm³/g] | BJH adsorption average pore width (4V/A) [nm] |
|---|---|---|---|
| Co/Ketjen Black EC300J milled | 412 | 0.69 | 7.9 |
| Co/MPC milled 300 rpm | 522 | 0.87 | 5.9 |
| Co/MPC milled 600 rpm | 870 | 1.33 | 5.8 |

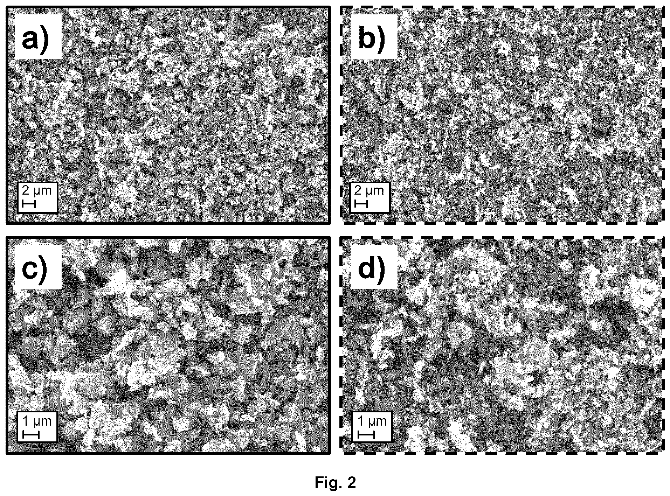

If we then observe the final product - PtCo catalyst on mesoporous carbon (MPC) (Figure 2), we again notice very visible difference in the primary particle sizes of the carbon support that is dependent on the milling conditions (300 vs 600 rpm). Figure 12 (a) and (c) show SEM imaging of PtCo/MPC catalyst where the carbon particles were milled at 300 rpm with 1 mm ZrO balls at different resolutions. Figure 2 (b) and (d) show SEM imaging of PtCo/MPC catalyst where the carbon particles were milled at 600 rpm with 1 mm ZrO balls at different resolutions.

*Table 3A: BET, total pore volume as well as average pore width data on various final Pt-Co/C catalysts including a commercial benchmark from Umicore.*

| Sample: | BET [m²/g] | Total pore volume [cm³/g] | BJH adsorption average pore width (4V/A) [nm] |
|---|---|---|---|
| Umicore Elyst Pt30 0690 | 530 | 0.80 | 7.3 |
| Pt-Co/MPC milled 300 rpm | 933 | 1.13 | 4.8 |
| Pt-Co/MPC milled 600 rpm | 880 | 1.19 | 5.4 |

Table 3A shows analogous results to Tables 1 and 2, however, on the final Pt-Co/C catalysts including the Umicore benchmark Elyst Pt30 0690. The observed trends are the same: a) MPC carbon catalyst has a higher BET than the microporous carbon catalyst analogue (Umicore benchmark), b) the total pore volume of the MPC materials is higher than the microporous carbon catalyst analogue (Umicore benchmark) and c) the average poor width of the microporous carbon catalyst analogue is higher than that of the MPC materials, whereas the average poor width increased in the case of 600 rpm milling in contrast to 300 rpm milling of the MPC carbon catalysts. Nevertheless, these properties are of less importance than the results shown in Figures 1-2. This is because these average properties do not tell the entire story - the trends in the BJH adsorption are more illustrative of the differences between the different types of carbon.

Further analysis in relation to the data in BJH curves such as those in Figures 1(a) to (d) was carried out. This is shown in Table 3B below.

*Table 3B: BET, total pore volume* as *well* as *cumulative pore volume (2-50 nm* as *well* as *>50 nm) data on various carbons.*

| Sample: | $S_{BET}$ [m²/g] | $V_{tot}$ [cm³/g] (Total BJH/cumulative pore volume) | $V_{2-50\ nm}$ [cm³/g] Cumulativ e pore volume 2-50 nm | $V_{>50\ nm}$ [cm³/g] Cumulativ e pore volume >50 nm | $V_{2-50\ nm}$ / $V_{tot}$ | $V_{>50\ nm}$ / $V_{tot}$ |
|---|---|---|---|---|---|---|
| Vulcan XC72 | 276 | 0.54 | 0.29 | 0.25 | 0.54 | 0.46 |
| Ketjen Black EC300J | 890 | 1.28 | 0.9 | 0.38 | 0.70 | 0.30 |
| CNovel | 1512 | 1.91 | 1.82 | 0.09 | 0.95 | 0.05 |
| CNovel milled 600 rpm | 1590 | 2.51 | 2.05 | 0.46 | 0.82 | 0.18 |

If we first look at the Table 3B, which is based on the data from Figure 1b (on the graph only data for 2-20 nm was shown, however, the actual data used for the Tables is as in the case of Figure 1a from 2 to >100 nm) - we can see that Vulcan has a generally low BET, but it still has some pore area - a small amount within the primary particles, but also a lot of pores forming between the primary carbon particles. However, in comparison to a carbon such as Ketjen Black EC300J, the cumulative pore volume between 2-50 nm is still fairly low (only 0.29 for Vulcan XC72 and vs 0.9 for Ketjen Black EC300J). On the other hand, also the cumulative pore volume >50 nm for Vulcan XC72 is not so low (0.25), but still lower than Ketjen Black EC300J (0.38) - however, higher than the non-milled CNovel (0.09). Accordingly, Vulcan can be seen to be relatively low in both categories of pores (2-50 nm as well as >50 nm); it could be said to 'fail' in both of these categories.

Ketjen Black EC300J is on the other hand a benchmark that has a relatively higher amount of pore volume in >50 nm category and we can say if 'succeeds' in the >50 nm category, but it still has a low pore volume, and therefore 'fails' in the 2-50 nm category.

In CNovel, we see the reverse of the pore distribution in Ketjen Black EC300J - it has relatively high pore volume (so 'succeeds') in the 2-50 nm category (MUCH higher value than Ketjen and Vulcan), but has a very low pore volume (so 'fails') in the >50 nm category (worse out of all 4 carbons). However, the present inventors found that as the CNovel material was milled down, this surprisingly improved the pore volume in >50 nm category. This means that, of the carbons tested, CNovel milled is the only one that has a relatively high pore volume (so 'succeeds) in both categories, i.e. 2-50 nm category and >50 nm. This is reflected in the curve seen in Figure 1a.

Table 3C showcases Co/C composites, illustrating that the trends discussed above for pure carbon also are seen when the composite Co/C particles are milled. While both Co/MPC composites have a significantly higher value of $V_{2\text{-}50\,nm}$ in contrast to the Ketjen Black EC300J, 300 rpm was not enough to push the $V_{>50\,nm}$ above Ketjen Black EC300J yet (0.12 vs 0.22). On the other hand, 600 rpm achieved the desired equivalent pore volume at >50nm as Ketjen Black EC300J (0.23 vs 0.22) while having a significantly higher $V_{2\text{-}50\,nm}$. The results for the 300 rpm analogue in Table 3C below may not be accurate, as the inventors observed 300 rpm sample ignited during the BET evaluation, explaining why the difference in 300 and 600 rpm (e.g. in $V_{2\text{-}50\,nm}$ / $V_{tot}$) are not as large as would be expected from pure carbon results above. Nevertheless, the normalized values of Co/Ketjen vs 600 rpm Co/MPC composite are very similar as in the case of pure carbons in Table 1.

*Table 3C: BET, total pore volume as well as cumulative pore volume (2-50 nm as well as >50 nm) data on Co/C composites.*

| Sample: | BET [m²/g] | $V_{tot}$ [cm³/g] (Total BJH/cumulative pore volume) | $V_{2\text{-}50\,nm}$ [cm³/g] Cumulativ e pore volume 2-50 nm | $V_{>50\,nm}$ [cm³/g] Cumulativ e pore volume >50 nm | $V_{2\text{-}50\,nm}$ / $V_{tot}$ | $V_{>50\,nm}$ / $V_{tot}$ |
|---|---|---|---|---|---|---|
| Co/Ketjen Black EC300J milled | 412 | 0.67 | 0.45 | 0.22 | 0.67 | 0.33 |
| Co/MPC milled 300 rpm | 522 | 0.91 | 0.79 | 0.12 | 0.87 | 0.13 |
| Co/MPC milled 600 rpm | 870 | 1.40 | 1.17 | 0.23 | 0.84 | 0.16 |

Finally, we see the same trend again with the final PtCo carbon catalyst in Table 3D - while the $V_{2\text{-}50\,nm}$ is on the order of 2x higher to Umicore benchmark, the 300 rpm has 2x lower $V_{>50\,nm}$, whereas the $V_{>50\,nm}$ for 600 rpm sample is comparable (0.19 vs 0.22).

*Table 3D: BET, total pore volume as well as cumulative pore volume (2-50 nm as well as >50 nm) data on various final Pt-Co/C catalysts including a commercial benchmark from Umicore.*

| Sample: | BET [m²/g] | $V_{tot}$ [cm³/g] (Total BJH/cumulative pore volume) | V2-50 nm [cm³/g] Cumulativ e pore volume 2-50 nm | $V_{>50\,nm}$ [cm³/g] Cumulativ e pore volume >50 nm | $V_{2\text{-}50\,nm}$ / $V_{tot}$ | $V_{>50\,nm}$ / $V_{tot}$ |
|---|---|---|---|---|---|---|
| Umicore Elyst Pt30 0690 | 530 | 0.76 | 0.54 | 0.22 | 0.71 | 0.29 |
| Pt-Co/MPC milled 300 rpm | 933 | 1.22 | 1.12 | 0.1 | 0.92 | 0.08 |
| Pt-Co/MPC milled 600 rpm | 880 | 1.28 | 1.09 | 0.19 | 0.85 | 0.15 |

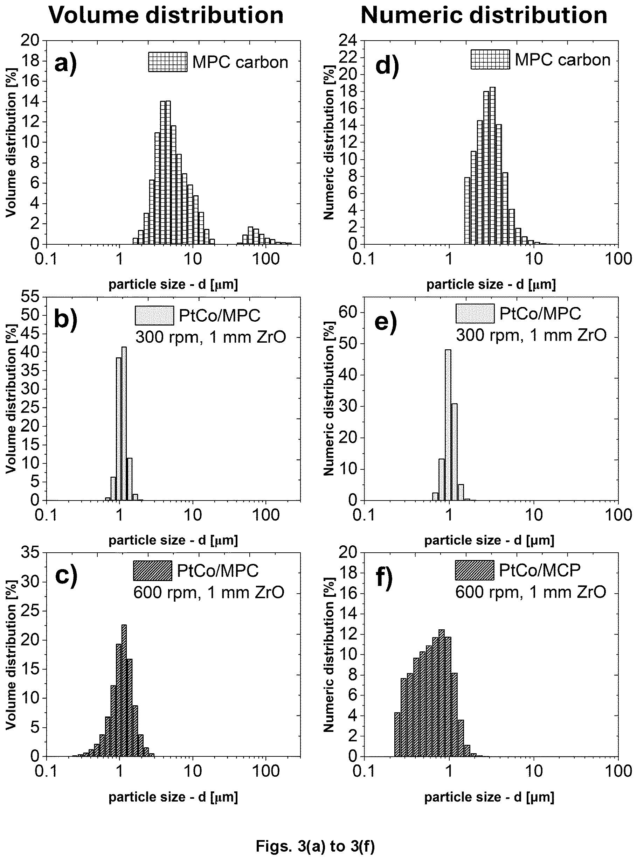

Figure 3 showcases both the volume and numeric distribution of carbon particles using laser diffraction method. There is a clear difference observed in the pristine carbon (i.e. the mesoporous carbon CNovel MH-18 as supplied) as well as when comparing the final PtCo/MPC catalyst materials where the cobalt nanoparticles on carbon composite (Co/MPC) has been milled by either 300 or 600 rpm using 1 mm ZrO balls prior to the deposition of platinum (see Figure 9). The pristine carbon has very large particles between 1-10+ $\mu$m in size, and also a further peak at around 70-80 $\mu$m (agglomerates of primary carbon particles). This is then milled down to a much narrower distribution by milling in our specific case the Co/MPC composite with 300 rpm. However, most particles remain around 1 $\mu$m in size. On the other hand, if we mill the Co/MPC composite with 600 rpm instead, we manage to break down the primary carbon particles even further and achieve significantly smaller carbon particle sizes of even below 0.3 $\mu$m.

*Figure 13 shows, respectively, volumetric and numeric distribution of carbon particle sizes using laser diffractions method of (a,d) MPC carbon, (b,e) PtCo/MCP catalyst where the carbon particles were milled at 300 rpm with 1 mm ZrO balls and (c,f) PtCo/MCP catalyst where the carbon particles were milled at 600 rpm with 1 mm ZrO balls.*

*Table 4: dx values calculated from volume distribution from Laser diffraction.*

| Sample | D10 [$\mu$m] | D50 [$\mu$m] | D90 [$\mu$m] | D95 [$\mu$m] |
|---|---|---|---|---|
| MPC carbon | 2.67 | 4.61 | 11.97 | 56.28 |
| PtCo/MPC 300 rpm, 1 mm ZrO | 0.83 | 0.99 | 1.19 | 1.26 |
| PtCo/MPC 600 rpm, 1 mm ZrO | 0.61 | 1.00 | 1.48 | 1.67 |

Table 4 shows the D10, D50, D90 and D95 values. In laser diffraction, the D10 represents the value where 10% of the particle distribution is smaller than that size (in microns). The D50, also known as the median, indicates the particle size where 50% of the distribution is smaller and 50% is larger. Finally, the D90 corresponds to the size where 90% of the distribution is smaller than that value. These percentile values help describe the width of the particle size distribution. It is important to note that it was not the final PtCo/MPC catalyst that has been milled by either 300 or 600 rpm, but that it was the Co/MPC composite (see Figure 9), however, the final catalysts have been measured using the laser diffraction. We can see that when the material is milled at 300 rpm with 1 ZrO mm balls, the D-values indeed indicate that the carbon particle size distribution is indeed narrower as already shown in Figures 3b and e. In the case of 600 rpm milling, we see that especially the D90 and D95 actually increase in respect to the 300 rpm analogue. This is aligned with the data showcased in Figures 1b,e,c and f where the 600 rpm analogue has a wider carbon particle size distribution than the 300 rpm analogue.

As already stated - the D-values merely help describe the width of the particle size distribution.

*Table 5: dx values calculated from numeric distribution obtained with Laser diffraction.*

| Sample | D10 [$\mu$m] | D50 [$\mu$m] | D90 [$\mu$m] | D95 [$\mu$m] |
|---|---|---|---|---|
| MPC carbon | 1.70 | 2.72 | 4.36 | 5.08 |
| PtCo/MPC 300 rpm, 1 mm ZrO | 0.78 | 0.93 | 1.11 | 1.17 |
| PtCo/MPC 600 rpm, 1 mm ZrO | 0.28 | 0.57 | 1.03 | 1.16 |

Table 5 is similar to Table 4, except it shows numeric distribution, rather than volumetric distribution.

Figure 14 shows BJH adsorption comparison data of: (a) cumulative pore volume for final PtCo catalysts, (b) differential pore volume distribution for final PtCo catalysts including Umicore benchmark Eyst Pt30 0690.

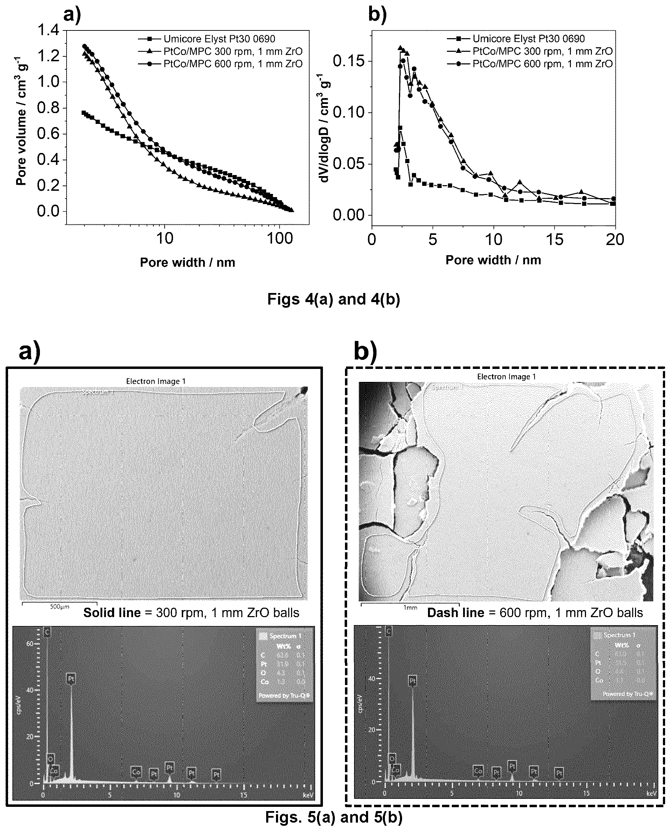

Figure 4 presents the same data as in the case of Figures 1a-d, but on the final catalyst materials (after step e) in Figure 9). The trends remain exactly the same - as shown in Figure 4a, milling the MPC material at 600 rpm in contrast to 300 rpm enables one to achieve similar cumulative pore volume when it comes to pore width between 10-100 nm when compared to the microporous carbon Pt-Co catalyst benchmark (Elyst Pt30 0690), however, a big difference is observed regardless of the milling conditions of MPC materials when it comes to pore width between 2-10 nm. The fact that the mesoporosity remains similar regardless of the milling is also clearly shown in Figure 4b, which also shows clear superiority of the primary pore structure in contrast to the same microporous Pt-Co catalyst benchmark.

Figure 15 shows EDX-SEM data on the final de-alloyed PtCo/MPC catalysts milled at (a) 300 rpm, 1 mm ZrO balls and (b) 600 rpm, 1 mm ZrO balls

Figure 5 shows the comparison of the SEM-EDX data on the chemical composition of both final de-alloyed PtCo/MPC analogues (see Figure 9) that were milled at different rpm speeds (300 and 600 rpm). We see that the chemical composition of both materials is very similar, thus, the main difference remains in the carbon primary particle size distribution (Figures 3b,e and 3c,f).

Figure 16 shows TF-RDE measurement overlap comparing both the PtCo/MPC catalysts milled at 300 and 600 rpm with 1 ZrO balls.

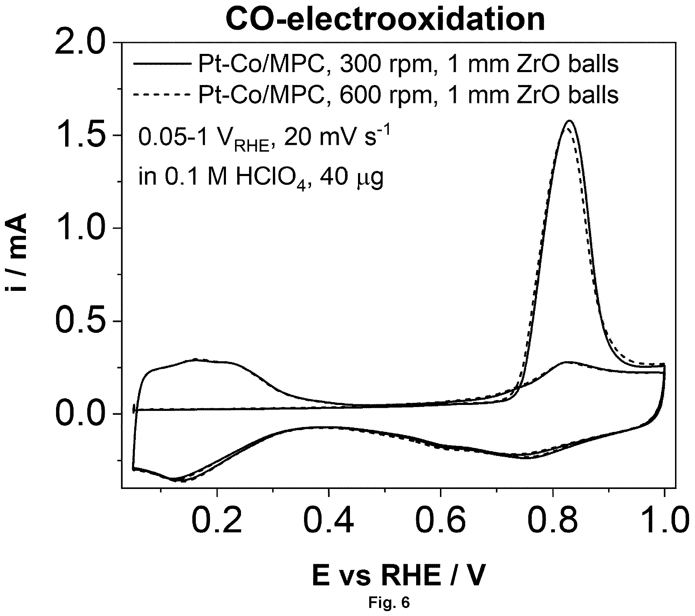

Figure 6 shows the comparison of both final de-alloyed PtCo/MPC catalyst analogues using liquid electrolyte half-cell TF-RDE methodology. Specifically, the figure shows a comparison of CO-electrooxidation experiments. It is well known to a skilled person that platinum utilization in liquid electrolyte half-cells is -100% regardless of the pore structure of the carbon support. This is because these measurements are performed in diluted acids such as in this case 0.1 M HClO$_4$. The acid provides all the necessary protons, whereas the liquid water reaches all the platinum active sites. Thus, one can consider that TF-RDE using CO-electrooxidation enables one to estimate 100% of the theoretical ECSA (normalized to CO-electrooxidation) of any given catalyst. Why this is important will be explained below when discussing the single-cell results in a membrane electrode assembly (MEA). What is visible is that in TF-RDE, the overlap between both final de-alloyed PtCo/MPC catalyst analogues is almost 100%, including the ECSA of both materials (see Table 6 below). Thus, in accordance to also other characterization, it should be considered that any major differences observed during single-cell evaluation should stem from the differences arising from the primary particle carbon support distributions and BJH adsorption properties. As already stated, while in these Examples this has been achieved via the use of milling, other methods of size reduction could be used.

Table 6 shows a comparison of the ECSA$_{CO}$ measured via TF-RDE for both final PtCo/M PC catalysts.

*Table 6: Comparison of the ECSA$_{CO}$ measured via TF-RDE for both final PtCo/MPC catalysts.*

| Sample | ECSA$_{CO}$ [m$^2$/g$_{Pt}$] |
|---|---|
| PtCo/MPC 300 rpm, 1 mm ZrO | 119 |
| PtCo/MPC 600 rpm, 1 mm ZrO | 120 |

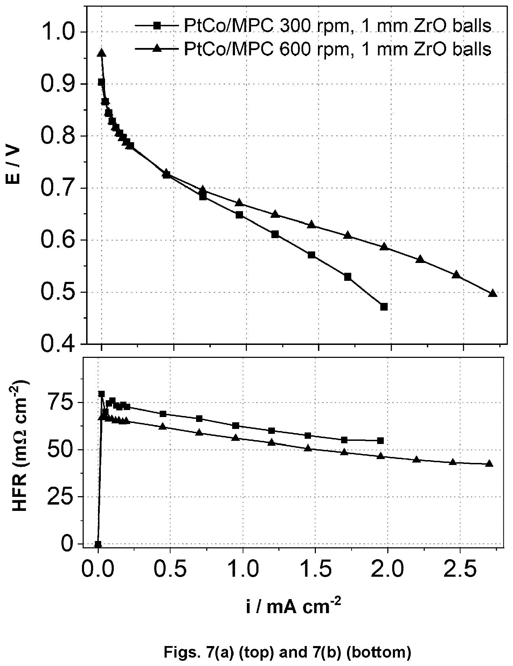

Figures 17(a) and 7(b) show, respectively, oxygen reduction reaction (ORR) polarization curves measured in a 4 cm$^2$ single-cell (7a) and high frequency resistances (HFR) (7b) of PtCo/MPC where the carbon particles were milled at 300 rpm with 1 mm ZrO balls PtCo/MPC where the carbon particles were milled at 600 rpm with 1 mm ZrO balls. Measurement conditions: 95 °C, H$_2$/air, 35/80 %RH (anode/cathode).

It is important to consider is only that Figure 7a shows the analogue where the carbon was milled at 300 rpm with 1 mm ZrO balls, whereas Figure 7b shows the analogue where the carbon was milled at 600 rpm with 1 mm ZrO balls. What is important is to consider the performance difference where at 95 °C and 35/80% RH (anode/cathode) the analogue milled at 300 rpm with 1 mm ZrO balls is reaching approximately 1.25 A/cm$^2$ at 0.6 V (Figure 7a) and the analogue milled at 300 rpm with 1 mm ZrO balls is reaching approximately 1.8 A/cm$^2$ at 0.6 V (Figure 7b). This is a 44 % increase in current density. It is known to a skilled person that this difference alone cannot be attributed to the small differences in the observed high frequency resistance (HFR). The most likely explanation is that the analogue from Figure 7a with larger primary carbon particle size distribution has more difficulties with proton resistance originating from the lack of liquid water. Prior to the catalyst coating membrane (CCM) fabrication, the catalyst is mixed into an ink with a proton conducting ionomer. This ionomer only coats the outside of the large primary carbon particles. With larger particle sizes, all the platinum within the pores relies on the presence of liquid water for the protons. However, since the average particle size of the MH-18 carbon as supplied is roughly 1 μm tor even higher, it is not only harder for this liquid water to travel to the core of the primary carbon particles, but also, it is more difficult for the transfer of protons. A platinum or platinum-alloy nanoparticle without ionomer coverage as well as without any liquid water does not participate in the oxygen reduction reaction during single-cell evaluation since the proton transport resistance of such a nanoparticle is extremely high. Additionally, such a material would also be expected to exhibit difficulties in the oxygen transport resistance through the catalyst layer. While the mesoporosity should improve the oxygen transport resistance within the pores of the carbon when compared to the state-of-the-art porous carbon blacks such as Ketjen Black EC300J, the macroporosity within the catalyst layer should provide an increase in the resistance for oxygen transport when compared to the same state-of-the-art carbon black support such as Ketjen Black EC300J. Thus, in addition to the issues with the proton resistance, also oxygen transport with such large mesoporous carbon particles (such as MH-18 as supplied) is far from ideal. In contrast, the analogue presented in Figure 7 has a primary carbon particle size distribution well below 1 μm as shown in Figure 3c,f, resulting from the harsher milling at 600 rpm. Additionally, as showcased with the BJH adsorption data, this analogue combines now a large fraction of mesopores with also an improved macroporosity network.

Accordingly, on one hand, the smaller primary carbon particles enable improved coating with the ionomer, easier penetration of liquid water to even the platinum or platinum-alloy nanoparticles within the pores, but combine this also with the already well known better transport properties for oxygen within the mesopores of the carbon, but now also with comparable transport properties of oxygen within the catalyst layer due to the comparable macroporosity with the state-of-the-art carbons such as Ketjen Black EC300J. These improvements led to the increased current density performances observed in Figure 7b.

EP 4 686 516 A1

Figure 8 represents ECSA (normalized to $H_{UPD}$) evaluation of both analogues presented in Figure 7 under various RH conditions performed in a solid-electrolyte single-cell. It is known to a skilled person that with any catalyst, the ECSA and thus, the utilization of platinum will decrease when decreasing the RH conditions to dryer conditions. Thus, it can be expected that while the analogues (Figure 6) have shown almost the same ECSA (normalized to CO-electrooxoidation) in liquid-electrolyte half-cell TF-RDE, this should no longer be the case in the solid-electrolyte single-cell. Additionally, it is to be expected that the ECSA/Pt-utilization in respect to the RH conditions should also show a very different behaviour.

Figure 8 showcases exactly this - (i) not only that 600 rpm analogue has a much higher ECSA in the single-cell than 300 rpm (if we focus on 100% RH, difference is 73 $m^2/g_{Pt}$ vs 59 $m^2/g_{Pt}$), but now also the difference between the 600 rpm PtCo/MPC analogue in comparison to the Umicore Pt-Co benchmark is almost a factor of 2 (73 $m^2/g_{Pt}$ vs 42 $m^2/g_{Pt}$). (ii) Additionally, 600 rpm analogue shows relatively a lower decrease in the ECSA (normalized to $H_{UPD}$) with lowering of the relative humidity towards dryer conditions (from 100 to 50 to 20%) - retaining >90% of the ECSA even at very dry conditions where the bottleneck for performance is thus not related to utilization of platinum, but to the proton conductivity of the ionomer and membrane polymer.

Two further Co/MPC composites were prepared with a higher loading of cobalt (Co/MPC_high_1 and Co/MPC_high_2 - milled at 400 RPM, but using a larger mill PM400, thus, the forces were comparable to the 600 rpm PM100 mill). The cobalt for all three Co/C composites from Table 3C (Co/Ketjen Black EC300J, Co/MPC milled 300 rpm and Co/MPC milled 600 rpm) have been to obtain in the final PtCo/MPC catalysts with ~30 wt% of Pt, however, these with the two have higher cobalt content composites (Co/MPC_high_1 and Co/MPC_high_2) the aim was to obtain ~50 wt% of Pt for the final Pt-Co/MPC catalyst. The results are shown in Table 7A below.

*Table 7A:* BET, total pore volume as well as cumulative pore volume (2-50 nm as well as >50 nm) data on the high cobalt loaded Co/MPC composites milled at 400 RPM using PM-400 mill.

| Sample: | BET [$m^2/g$] | $V_{tot}$ [$cm^3/g$] (Total BJH/cum ulative pore volume) | $V_{2\text{-}50\ nm}$ [$cm^3/g$] Cumulativ e pore volume 2-50 nm | $V_{>50\ nm}$ [$cm^3/g$] Cumulativ e pore volume >50 nm | $V_{2\text{-}50\ nm}$ / $V_{tot}$ | $V_{>50\ nm}$ / $V_{tot}$ |
|---|---|---|---|---|---|---|
| Co/MPC_h igh_1 milled 400 rpm (PM-400) | 616 | 1.1 | 0.82 | 0.28 | 0.75 | 0.25 |
| Co/MPC_h igh_2 milled 400 rpm (PM-400) | 630 | 1.05 | 0.82 | 0.23 | 0.78 | 0.22 |

Since the cobalt content is higher, the BET per gram of the composite is lower (~600 vs 870 $m^2/g$). Correspondingly, also the total pore volume as well as $V_{2\text{-}50\ nm}$, since part of the weight is in additional mass of the cobalt. The results are shown in Table 7B below.

*Table 7B:* EDX-SEM data (Co, C) as well as BET data on the various Co/C composites.

| Sample | Co (wt%) | C (wt%) | BET [$m^2/g$] | BET [$m^2/g_{carbon}$] |
|---|---|---|---|---|
| Co Ketjen Black EC300J milled | 24.8 | 66.5 | 412 | 620 |
| Co/MPC milled 300 rpm | 24.3 | 64.7 | 522 | 806 |
| Co/MPC milled 600 rpm | 24.3 | 64.7 | 870 | 1344 |
| Co/MPC_high_1 | 34.6 | 53.1 | 616 | 1160 |
| Co/MPC_high_2 | 33.4 | 53.7 | 630 | 1186 |

As can be seen, similar trends are seen with the Co/MPC composites with higher Co loading compared to the lower Co loading.

23

**Claims**

1. A composite material, the composite material comprising composite particles comprising particles of a mesoporous carbon support material having dispersed on their surfaces noble metal nanoparticles and/or noble metal-M alloy nanoparticles and optionally particles of the elemental metal M or metal oxide $MO_y$, wherein y is >0 to a stoichiometric value of the metal oxide, wherein M is a less noble metal than the noble metal,
wherein the composite particles have a BJH average pore diameter of from 2 to 50 nm and a particle size D90, as measured by laser diffraction and volume distribution, of 10 $\mu$m or less.

2. A composite material according to claim 1, wherein the mesoporous carbon support material has been made by a technique selected from an activation method, catalytic activation using metal ions, a template method, and a carbonised method.

3. A composite material according to claim 2, wherein the mesoporous carbon support material has been made by an endo-template method using an inorganic substance as the template, optionally wherein the inorganic substance is magnesium oxide.

4. A composite material according to any one of the preceding claims, wherein the composite particles have a BJH average pore diameter of from 2 to 10 nm.

5. A composite material according to any one of the preceding claims, wherein the mesoporous carbon support material has BET surface area of at least 500 $m^2/g$, optionally at least 1000 $m^2/g$.

6. A composite material according to any one of the preceding claims, wherein the composite particles have a particle size D90, as measured by laser diffraction and volume distribution, of 5 $\mu$m or less, optionally from 0.1 $\mu$m to 5 $\mu$m.

7. A composite material according to any one of the preceding claims, wherein the composite particles have a ratio of (i) BJH cumulative pore volume for pores of more than 50 nm divided by (ii) total BJH/cumulative pore volume $V_{tot}$ $cm^3/g$ (i.e. a cumulative pore volume from 2 nm upwards, including pores from 2 nm to 50 nm and from 50 nm upwards) of at least 0.08, preferably at least 0.1.

8. A composite material according to any one of the preceding claims, wherein the noble metal is selected from Pt, Ir, Rh, Pd and Au and wherein M is selected from Cu, Ni, Co, Fe, Ag, Cr, Ti, Pb, Sn, Mo, W, Zn, Y, Ce, Nd, Gd and Pd, optionally, wherein the noble metal is Pt and M is Co.

9. A method of making a composite material, the method comprising:
providing particles of a mesoporous carbon support material,

forming composite particles by dispersing noble metal nanoparticles and/or noble metal-M alloy nanoparticles on the surfaces of the mesoporous carbon support material, wherein M is a less noble metal than the noble metal, such that the composite particles have a BJH average pore diameter of from 2 to 50 nm and a particle size D90, as measured by laser diffraction, of 10 $\mu$m or less,
optionally wherein either: (i) the mesoporous carbon support material has a particle size D90 of from 10 $\mu$m or less before the noble metal nanoparticles and/or noble metal-M alloy nanoparticles are dispersed on the surfaces of the mesoporous carbon support **or**
(ii) the mesoporous carbon support material has a particle size D90 of greater than 10 $\mu$m before the noble metal nanoparticles and/or noble metal-M alloy nanoparticles are dispersed on the surfaces of the mesoporous carbon support,
and, after the noble metal nanoparticles and/or noble metal-M alloy nanoparticles are dispersed on the surfaces of the mesoporous carbon support, the particles are subjected to a size reduction, such that the composite particles have the particle size D90, as measured by laser diffraction, of from 10 $\mu$m or less.

10. The method of making a composite material according to claim 9, wherein the method involves, providing a mesoporous carbon support material having a particle size D90 of greater than 10 $\mu$m, and then carrying out a size reduction on the mesoporous carbon support material, before or after the noble metal nanoparticles and/or noble metal-M alloy nanoparticles are dispersed on the surfaces of the carbon support, such that the carbon support material has a particle size D90 of from 10 $\mu$m or less.

11. The method of making a composite material according to claim 10, wherein the size reduction involves milling the mesoporous carbon support material (which may or may not have noble metal nanoparticles and/or noble metal-M alloy nanoparticles are dispersed on its surfaces).

12. The method of making a composite material according to any one of claims 9 to 11, wherein the mesoporous carbon support material has been made by an endo-template method, optionally using an inorganic substance as the template, optionally wherein the inorganic substance is magnesium oxide.

13. The method of making a composite material according to any one of claims 9 to 12, wherein the noble metal is selected from Pt, Ir, Rh, Pd and Au and wherein M is selected from Cu, Ni, Co, Fe, Ag, Cr, Ti, Pb, Sn, Mo, W, Zn, Y, Ce, Nd, Gd and Pd, optionally, wherein the noble metal is Pt and M is Co.

14. A catalyst comprising the composite material according to claim 1.

15. A method of catalysing a chemical reaction, the method comprising contacting one or more reactants with a catalyst according to claim 3.

**a)**

**b)**

**c)**

**d)**

**e) 300 rpm, 1 mm ZrO**

**f) 600 rpm, 1 mm ZrO**

**Figs. 1(a) to (f)**

Fig. 2

## Volume distribution

## Numeric distribution

Figs. 3(a) to 3(f)

Figs 4(a) and 4(b)

Solid line = 300 rpm, 1 mm ZrO balls

Dash line = 600 rpm, 1 mm ZrO balls

Figs. 5(a) and 5(b)

**CO-electrooxidation**

Pt-Co/MPC, 300 rpm, 1 mm ZrO balls

Pt-Co/MPC, 600 rpm, 1 mm ZrO balls

$0.05\text{-}1\ V_{RHE}$, $20\ mV\ s^{-1}$

in $0.1\ M\ HClO_4$, $40\ \mu g$

Fig. 6

EP 4 686 516 A1

Figs. 7(a) (top) and 7(b) (bottom)

Figs. 8(a) and 8(b)

```
┌─────────────────────────┐
│   (a) Less precious      │
│   metal deposition on    │
│        support           │
└─────────────────────────┘
            │ M/C
            ▼
┌─────────────────────────┐
│   (b) Milling of M/C     │
│                          │
└─────────────────────────┘
            │ M/C milled
            ▼
┌─────────────────────────┐
│   (c) Precious metal     │
│    deposition on the     │
│  milled M/C + washing    │
└─────────────────────────┘
            │ PGM+M/C milled
            ▼
┌─────────────────────────┐
│  (d) Alloy formation via │
│    thermal annealing     │
└─────────────────────────┘
            │ PGM-M/C milled alloy
            ▼
┌─────────────────────────┐
│  (e) De-alloying of the  │
│   PGM-M/C milled alloy   │
│   composite + washing    │
└─────────────────────────┘
            │ Final catalyst
            ▼
┌─────────────────────────┐
│   (f) Characterization   │
│                          │
└─────────────────────────┘
```

**Fig. 9**

a) Types of pores

Size of the pores

<2 nm          2-50 nm          >50 nm

Microporous    Mesoporous    Macroporous

b) Example on Ketjen black porous carbon support

Ketjenblack 'pellets'      Agglomerate      Primary aggregate      Basic carbon particle
ca 3 mm                    50-200 μm        100-1000 nm            30-50 nm

Micropores ('cracks')

Macropores

Macropores

Fig. 10

Europäisches
Patentamt

European
Patent Office

Office européen
des brevets

# EUROPEAN SEARCH REPORT

**Application Number**

EP 24 19 1544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/328846 A1 (SHODAI YOSHIO [JP] ET AL) 13 October 2022 (2022-10-13) | 1-7, 9-12,14, 15 | INV. B22F1/18 B01J23/38 |
| Y | * claims 1, 6-7 * <br> * paragraphs [0089] - [0091]; example 1 * <br> ----- | 8,13 | B01J23/42 H01M4/90 H01M4/92 |
| Y | YANG YI ET AL: "Highly active PtCo nanoparticles on hierarchically ordered mesoporous carbon support for polymer electrolyte membrane fuel cells", JOURNAL OF MATERIAL SCIENCE, KLUWER ACADEMIC PUBLISHERS, DORDRECHT, vol. 56, no. 23, 17 May 2021 (2021-05-17), pages 13083-13095, XP037462109, ISSN: 0022-2461, DOI: 10.1007/S10853-021-06159-8 [retrieved on 2021-05-17] | 8,13 | |
| A | * page 13085, right-hand column, paragraph 2 * <br><br> ----- | 1-7, 9-12,14, 15 | |
| | | | **TECHNICAL FIELDS SEARCHED (IPC)** |
| A | WO 2021/117369 A1 (PANASONIC IP MAN CO LTD [JP]) 17 June 2021 (2021-06-17) * the whole document * ----- | 1-15 | B22F B01J H01M |
| A | US 9 755 247 B2 (STUDIENGESELLSCHAFT KOHLE MBH [DE]) 5 September 2017 (2017-09-05) * the whole document * ----- | 1-15 | |

The present search report has been drawn up for all claims

| Place of search | Date of completion of the search | Examiner |
|---|---|---|
| The Hague | 20 February 2025 | Helgadóttir, Inga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 1544

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| US 2022328846 A1 | 13-10-2022 | CA 3139999 A1 | 10-12-2020 |
| | | CN 113924670 A | 11-01-2022 |
| | | EP 3978112 A1 | 06-04-2022 |
| | | JP 7464597 B2 | 09-04-2024 |
| | | JP WO2020246491 A1 | 10-12-2020 |
| | | KR 20220016889 A | 10-02-2022 |
| | | US 2022328846 A1 | 13-10-2022 |
| | | WO 2020246491 A1 | 10-12-2020 |
| WO 2021117369 A1 | 17-06-2021 | CN 113207317 A | 03-08-2021 |
| | | EP 4074418 A1 | 19-10-2022 |
| | | JP 6931808 B1 | 08-09-2021 |
| | | JP WO2021117369 A1 | 17-06-2021 |
| | | US 2022021005 A1 | 20-01-2022 |
| | | US 2024413351 A1 | 12-12-2024 |
| | | WO 2021117369 A1 | 17-06-2021 |
| US 9755247 B2 | 05-09-2017 | CA 2861412 A1 | 15-08-2013 |
| | | CA 2861448 A1 | 15-08-2013 |
| | | CN 104093482 A | 08-10-2014 |
| | | CN 104159666 A | 19-11-2014 |
| | | DE 102012102120 A1 | 08-08-2013 |
| | | EP 2626131 A1 | 14-08-2013 |
| | | EP 2812110 A1 | 17-12-2014 |
| | | EP 2812114 A1 | 17-12-2014 |
| | | JP 6305348 B2 | 04-04-2018 |
| | | JP 6305349 B2 | 04-04-2018 |
| | | JP 2015511876 A | 23-04-2015 |
| | | JP 2015513449 A | 14-05-2015 |
| | | KR 20140126330 A | 30-10-2014 |
| | | KR 20140133824 A | 20-11-2014 |
| | | US 2015017555 A1 | 15-01-2015 |
| | | US 2015050583 A1 | 19-02-2015 |
| | | WO 2013117192 A1 | 15-08-2013 |
| | | WO 2013117725 A1 | 15-08-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020187933 A

**Non-patent literature cited in the description**

- **ALLEN J.BARD,LARRY R. FAULKNER**. Electrochemical Methods,Fundamentals and Applications. John Wiley & Sons, Inc., 2001, 808-809

- *Nature Communications*, 2021, vol. 12